# EUROPÄISCHE PATENTANMELDUNG

(11) **EP 4 632 218 A1**
(43) Veröffentlichungstag der Anmeldung: **15.10.2025**
(21) Anmeldenummer: 24169130.2
(22) Anmeldetag: 09.04.2024
(51) Int. Cl.: F03D 7/02

(54) **VERFAHREN ZUM STEUERN EINER WINDENERGIEANLAGE BEI EINEM SICHERHEITSSTOPP**

(71) Anmelder: Wobben Properties GmbH, 26607 Aurich (DE)
(72) Erfinder: Mühlenbrock, Henry, 26759 Hinte (DE); Stämmler, Michael, 64673 Zwingenberg (DE); Schall, Nils-Hendric, 14199 Berlin (DE); Schuirmann, Christopher, 26603 Aurich (DE)
(74) Vertreter: Eisenführ Speiser

(57) **Zusammenfassung**

Die Erfindung betrifft ein Verfahren zum Steuern einer Windenergieanlage, wobei die Windenergieanlage einen aerodynamischen Rotor mit in ihrem Blattwinkel verstellbaren Rotorblättern aufweist, und der Rotor mit einer variablen Rotordrehzahl betreibbar ist, wobei zum Anhalten des Rotors, die Rotorblätter in Richtung zu einer Fahnenstellung hin verstellt werden, das Anhalten durch ein Auslöseereignis ausgelöst wird und wenn in Abhängigkeit vom Auslöseereignis ein Sicherheitsstopp ausgelöst wird, zusätzlich in Abhängigkeit von dem Auslöseereignis eine von mehreren Steuerstrategien zum Ausführen des Sicherheitsstopps ausgewählt wird.

## Beschreibung

Die vorliegende Erfindung betrifft ein Verfahren zum Steuern einer Windenergieanlage und die vorliegende Erfindung betrifft eine entsprechende Windenergieanlage.

Windenergieanlagen sind bekannt, sie erzeugen elektrische Leistung aus Wind, um diese in ein elektrisches Versorgungsnetz einzuspeisen. Es können dabei aber verschiedenste Ereignisse auftreten, die das Anhalten der Windenergieanlage erforderlich machen.

Die Windenergieanlage, die vereinfachend auch als Windturbine oder Turbine bezeichnet werden kann, kann je nach Ereignis, das zum Anhalten, also Stoppen, der Turbine führt, verschiedene Stoppvorgänge ausführen. Besonders kann unterschieden werden, wie dringend und schnell der Stoppvorgang ausgeführt werden muss. Zum Anhalten der Windenergieanlage werden zumindest die Rotorblätter verstellt, was auch als Pitchen bezeichnet wird. Insbesondere werden die Rotorblätter zum Anhalten in eine Fahnenstellung gedreht. Außerdem wird das Generatormoment angepasst, das zumindest am Ende des Anhaltevorgangs auf null gesteuert wird.

Wie genau das Pitchen verläuft, insbesondere, ob dafür ein Profil verwendet wird, also ein zeitlicher Verlauf der Blattverstellung, und wie ein solches Profil ausgebildet ist, und auch wie genau das Anpassen des Generatormoments erfolgt, kann von dem Ereignis abhängen, das den Anhaltevorgang auslöst. Besonders bei einem Sicherheitsstopp sollte das Anhalten möglichst schnell ausgeführt werden, was entsprechend auch zu einem schnellen Verstellen der Rotorblätter führen kann.

Hier kommt auch in Betracht, dass die Stoppvorgänge durch die Hardwareeinheit unterschieden werden, die den jeweiligen Anhaltevorgang steuert.

Es kommt auch in Betracht, dass mehrere Ereignisse zugleich einen Stoppvorgang einleiten und dann abhängig von Ereignis, Steuerung und/oder der Hardwareeinheit, die den Stoppvorgang steuert, eine Priorisierung der vorhandenen Stoppprozeduren vorgenommen wird. Entsprechend können Stoppprozeduren vordefiniert sein und dann je nach Ereignis ausgeführt werden.

Einem Sicherheitsstopp wird dabei die höchste Priorität zugeordnet.

Beim Ausführen eines solchen Stoppvorgangs ist darauf zu achten, dass Lasten nicht überschritten werden. Dazu kann während eines Bemessungsprozesses sichergestellt werden, dass die Bemessungslasten durch keine der Stoppvorgänge, also vorbestimmte Stoppprozeduren, überschritten werden. Dies kann durch die Begrenzung einer eventuellen Pitchrate, also Verstellrate für die Blattwinkel, auf einen Grenzwert erreicht werden.

Für den Sicherheitsstopp ist dabei eine Stoppprozedur vorgesehen, für andere Stopps sind andere Stoppprozeduren vorgesehen.

Besonders beim Durchführen eines Sicherheitsstopps kann es dabei zu hohen Belastungen der Windenergieanlage kommen, da bei einem Sicherheitsstopp die Windenergieanlage oftmals schnell angehalten werden muss und oftmals auch nicht alle Möglichkeiten der Betriebssteuerung zur Verfügung stehen, um den Stoppvorgang dezidiert zu steuern, denn ein solcher Sicherheitsstopp wird häufig im Zusammenhang mit einem Fehler ausgeführt, der auch einen Fehler in der Anlagensteuerung betreffen kann, sodass die Anlagensteuerung dann vielleicht nicht mehr in vollem Umfang zur Verfügung steht.

Der vorliegenden Erfindung liegt somit die Aufgabe zugrunde, zumindest eines der vorstehend genannten Probleme zu adressieren. Insbesondere soll eine Lösung geschaffen werden, bei der selbst bei Sicherheitsstopps das Anhalten der Anlage möglichst lastarm durchgeführt wird. Zumindest soll zu bisher bekannten Lösungen eine alternative Lösung vorgeschlagen werden.

Erfindungsgemäß wird ein Verfahren nach Anspruch 1 vorgeschlagen. Das Verfahren betrifft somit das Steuern einer Windenergieanlage, die einen aerodynamischen Rotor mit in ihrem Blattwinkel verstellbaren Rotorblättern aufweist und bei der der Rotor mit einer variablen Rotordrehzahl betreibbar ist. Zum Anhalten des Rotors ist vorgesehen, dass die Rotorblätter in Richtung zu einer Fahnenstellung hin verstellt werden. Eine Fahnenstellung ist besonders eine solche, bei der die Rotorblätter mit ihrer Vorderkante zum Wind und ihrer Hinterkante zur windabgewandten Seite verstellt werden, bezogen auf eine Ausrichtung der Windenergieanlage, bei der der Rotor zum Wind ausgerichtet ist. Der Rotor ist also mit seiner Rotorebene etwa senkrecht zur Windrichtung ausgerichtet. Die Rotorblätter haben dann etwa einen Winkel von 90° und weisen - vereinfacht ausgedrückt - in dieselbe Richtung wie eine Rotorachse der Windenergieanlage, nämlich mit ihrer Blattvorderkante, die auch als Blattnase bezeichnet werden kann, zum Wind.

Es wird hier vorgeschlagen, dass die Rotorblätter in Richtung zu einer Fahnenstellung hin verstellt werden, sie müssen damit nicht unbedingt genau diese Fahnenstellung am Ende des Sicherheitsstopps einnehmen, sondern nur in diese Richtung gedreht werden und insoweit werden die Rotorblätter aus dem Wind gedreht. Vorzugsweise erreichen sie die Fahnenstellung zumindest bis auf eine tolerierte oder gewünschte Abweichung, die dem Betrage nach im Bereich von 0° bis 10° liegen kann. Es können Strategien vorgesehen sein, bei denen das exakte Erreichen der Fahnenstellung nicht unbedingt erforderlich ist, insbesondere, wenn die Rotorblätter am Ende des Sicherheitsstopps nicht festgesetzt werden, was unten noch näher erläutert wird. Die Fahnenstellung kann etwas 90°, in manchen Windenergieanlagen auch etwa 100° betragen.

Ein solches Anhalten wird durch ein Auslöseereignis ausgelöst und in Abhängigkeit von dem Auslöseereignis können unterschiedliche Anhaltevorgänge ausgelöst werden, die hier auch als Anhalteart bezeichnet werden können. Eine solche Anhalteart ist ein Sicherheitsstopp. In Abhängigkeit vom Auslöseereignis kann also ein Sicherheitsstopp ausgelöst werden.

Es wird vorgeschlagen, dass, wenn in Abhängigkeit vom Auslöseereignis ein Sicherheitsstopp ausgelöst wird, zunächst in Abhängigkeit von dem Auslöseereignis eine von mehreren Steuerstrategien zum Ausführen des Sicherheitsstopps ausgewählt wird. Solche Steuerstrategien zum Ausführen des Sicherheitsstopps können auch synonym als Sicherheitsstoppstrategien bezeichnet werden. Eine von mehreren solcher Sicherheitsstoppstrategien auszuführen kann dadurch realisiert werden, dass eine von mehreren hinterlegten Sicherheitsstoppstrategien ausgewählt wird. Es kommt aber auch in Betracht, dass eine Sicherheitsstoppstrategie eingestellt wird, insbesondere in ihrer Parametrierung. Auch das ist darunter zu verstehen, dass eine von mehreren Steuerstrategien zum Ausführen des Sicherheitsstopps ausgewählt wird.

Hier wurde besonders erkannt, dass nicht nur eine einzige Steuerstrategie zum Ausführen des Sicherheitsstopps, also nicht nur eine einzige Sicherheitsstoppstrategie vorgesehen sein sollte, sondern, dass mehrere Sicherheitsstoppstrategien vorgesehen sein sollten, weil auch im Falle eines Sicherheitsstopps unterschiedliche Bedingungen auftreten können. Solche unterschiedlichen Bedingungen können das Auslöseereignis betreffen, aber auch die aktuelle Situation, in der sich die Windenergieanlage befindet, also, ob sie beispielsweise eine hohe oder geringe Drehzahl aufweist und in welcher Position die Rotorblätter hinsichtlich ihres Blattwinkels sind. Auch die umgebenden Wetterzustände können eine Rolle spielen.

Ein Sicherheitsstopp kann besonders dadurch gekennzeichnet sein, dass seine Auslöseereignisse als sicherheitsrelevante Auslöseereignisse in einer Sicherheitstabelle hinterlegt sind. Ein Sicherheitsstopp kann außerdem oder alternativ dadurch gekennzeichnet sein, dass seine Auslöseereignisse, soweit sie quantifizierbar sind, das Verletzen eines Sicherheitsgrenzwertes betreffen. Hier kommt besonders eine Überschreitung einer Grenzdrehzahl in Betracht, das Überschreiten einer Grenzlast und/oder das Überschreiten einer Grenzschwingungsamplitude, um nur einige Beispiele zu nennen.

Gemäß einem Aspekt wird vorgeschlagen, dass den Steuerstrategien jeweils eine Trajektorie zugrunde liegt. Insbesondere wird eine solche Trajektorie ganz oder teilweise abgefahren. Das Anhalten der Windenergieanlage erfolgt also entlang einer solchen Trajektorie.

Die Trajektorie kann jeweils durch einen Pitchratenverlauf und zugeordneten Blattwinkel gekennzeichnet sein. Optional ist sie zusätzlich durch einen zugeordneten Verlauf einer Generatorleistung und/oder eines Generatormoments gekennzeichnet.

Außerdem oder alternativ ist die Trajektorie durch die Pitchrate über die Zeit gekennzeichnet.

Somit kommt insbesondere in Betracht, dass die Rotorblätter anhand des Pitchratenverlaufs, insbesondere gemäß der Pitchrate über die Zeit, verstellt werden. Dabei ist dem Pitchratenverlauf ein Blattwinkel zugeordnet, sodass einem bestimmten Blattwinkel eine bestimmte Pitchrate zugeordnet ist. Insoweit ist der zugeordnete Blattwinkel insbesondere als Anfangs- oder Startzustand zu verstehen.

Der zugeordnete Blattwinkel ist insbesondere ein Zielblattwinkel, sodass der Pitchratenverlauf so vorgesehen ist, dass dieser Zielblattwinkel erreicht wird. Dazu kann auch ein Anfangsblattwinkel verwendet werden und der Pitchratenverlauf entsprechend berechnet werden, dass sich ein gewünschter Zielblattwinkel ergibt. Dabei kann der Zielblattwinkel für alle Rotorblätter gleich sein, er kann aber auch verschieden sein, was unten noch erläutert wird. Es kommt auch in Betracht, dass zwar ein Zielblattwinkel vorgegeben wird, dass die Rotorblätter aber nach Erreichen des Zielblattwinkels nicht festgesetzt werden müssen.

Es kommt auch in Betracht, dass sich an den ausgeführten Sicherheitsstopp eine nachgelagerte Schutzsteuerung oder Regelung anschließt, die die Rotorblätter noch ein wenig in ihren Blattwinkeln verstellen kann, oder eine gewisse Eigenbewegung der Rotorblätter hinsichtlich ihres Blattwinkels zulässt. Insoweit kommt auch in Betracht, dass der zugeordnete Blattwinkel, der also dem Pitchratenverlauf zugeordnet ist, eine gewisse Toleranz zulässt, jedenfalls soweit er einen Zielblattwinkel bildet.

Zusätzlich kann ein einer ausgewählten Steuerstrategie zugeordneter Verlauf einer Generatorleistung und/oder eines Generatormoments vorgesehen sein. Besonders wird das Generatormoment dabei abhängig von der Drehzahl des Rotors oder der Zeit vorgegeben. Somit kann also zugleich mit dem Pitchratenverlauf eine Generatorleistung oder ein Generatormoment eingestellt werden. Das kann durch die gewählte Steuerstrategie vorgegeben sein. Durch den Pitchratenverlauf kann besonders eine Blattverstellung vorgegeben werden, durch die Designlasten eingehalten werden, was durch das Generatormoment bzw. die Leistung ergänzt werden kann. Ob ein Generatormoment oder eine Generatorleistung eingestellt wird, hängt insbesondere vom generellen Steuerprinzip der Windenergieanlage ab. Von der Wirkung her ist es im Wesentlichen gleich, ob die Generatorleistung oder das Generatormoment angesteuert wird. Im Grunde wird die Generatorleistung faktisch über das Generatormoment beeinflusst.

Die Trajektorie kann besonders durch die Pitchrate über die Zeit gekennzeichnet sein und insoweit kann dann der Pitchratenverlauf die Pitchrate über die Zeit sein. Somit kann die Pitchrate dadurch eindeutig vorgegeben werden und die Steuerstrategie zum Anhalten der Windenergieanlage orientiert sich daran. Gegebenenfalls weitere Einstellungen, wie die Generatorleistung bzw. das Generatormoment, können sich daran orientieren.

Insoweit Pitchrate und Generatorleistung oder Generatormoment als Trajektorie vorgegeben sind, so sind in dieser Trajektorie die Zusammenhänge festgelegt.

Gemäß einem Aspekt wird vorgeschlagen, dass bei einem Sicherheitsstopp die Windenergieanlage in einen Stillstand gesteuert wird, in dem sich der Rotor nicht mehr dreht und sich in einer sicheren Position befindet. Eine sichere Position ist besonders eine solche, bzw. beschreibt einen Zustand, der dazu führt, dass Design-Lasten unter allen Bedingungen, die zur Auslegung einer Windenergieanlage zu berücksichtigen sind, eingehalten werden. Design-Lasten bezeichnen Lasten, auf die die Windenergieanlage ausgelegt ist. Das sind somit Lasten, auf die die Windenergieanlage für all die Bedingungen, die zur Auslegung einer Windenergieanlage zu berücksichtigen sind, ausgelegt ist.

Die sichere Position kann auch eine Fahnenstellung sein, und eine Fahnenstellung kann eine Blattstellung im Bereich von 80° bis 100° sein. Es kann aber auch eine andere Blattstellung sein, z.B. eine, bei der die Hinterkante eines, mehrerer, oder aller Rotorblätter zum Wind weist. Das betreffende Rotorblatt nimmt dann also einen Blattwinkel von etwa 270° ein.

Es kommt somit auch in Betracht, dass die Rotorblätter in die Fahnenstellung verstellt werden und/oder die Rotorblätter zunächst in eine Position von 80° bis 100°, insbesondere etwa 90°. verstellt werden, insbesondere mittels einer vorbestimmten Trajektorie. Anschließend, also im Anschluss an das Verstellen in die sichere Position, die Fahnenstellung und/oder in den Bereich von 80° bis 100° wird die Windenergieanlage in eine Trudelposition gebracht.

Somit wird unterstrichen, dass bei einem Sicherheitsstopp die Windenergieanlage angehalten wird und gemäß einer Variante wird auch dafür gesorgt, dass sich der Rotor nicht mehr dreht. Er kann dafür festgebremst werden oder generatorisch in Position gehalten werden.

Insbesondere dafür werden die Rotorblätter in die Fahnenstellung verstellt. Sie werden also so weit aus dem Wind gedreht, dass sie kein aerodynamisches Drehmoment mehr erzeugen und auch eine möglichst geringe Angriffsfläche für den Wind bieten.

Besonders kann eine Steuerstrategie beim Sicherheitsstopp sein, dass die Rotorblätter zunächst in eine Position von etwa 90° verstellt werden, also insbesondere etwa in die Fahnenstellung. Die Anlage kann dann dort anhalten, wodurch ein Sicherheitsaspekt realisiert ist. Dann kann gemäß der Steuerstrategie eine Verstellung der Rotorblätter insoweit fortgesetzt werden, dass die Windenergieanlage in eine Trudelposition gebracht wird. Die Rotorblätter können dazu wieder etwas in den Wind gedreht werden, aber nur so weit, dass sich der aerodynamische Rotor nur sehr langsam dreht, insbesondere mit einer Drehzahl von unter 10 % der Nenndrehzahl, insbesondere unter 5 % der Nenndrehzahl.

Hier wurde besonders erkannt, dass eine lastarme Position durch einen solchen Trudelbetrieb erreicht werden kann, weil dadurch die Rotorblätter bzw. der Rotor teilweise einer einwirkenden Kraft aus dem Wind nachgeben können. Besonders ist vorgesehen, dass das Verstellen auch in die Position von etwa 90° mittels einer vorbestimmten Trajektorie erfolgt. Besonders kann, wie weiter oben erläutert wurde, eine Pitchrate zugrunde liegen, die über die Zeit vorgegeben ist. Es kann eine Pitchrate auch über einen Blattwinkel vorgegeben werden, sodass also je nach jeweils vorhandenem bzw. erreichtem Blattwinkel eine bestimmte Pitchrate verwendet wird.

Auch diese vorgeschlagenen Strategien werden als Sicherheitsstopp ausgeführt, also insbesondere nicht mit der üblichen Anlagen- oder Betriebssteuerung.

Gemäß einem Aspekt wird vorgeschlagen, dass mit der Steuerstrategie für die Rotorblätter unterschiedliche Zielblattwinkel angesteuert werden. Ein Verstellen in Richtung zur Fahnenstellung kann zwar auch hier vorgesehen sein, die Rotorblätter erreichen dann aber nicht exakt die Fahnenstellung und weichen von dieser zu einander unterschiedlich ab. Dadurch wird erreicht, dass nicht alle Rotorblätter denselben Blattwinkel aufweisen und dadurch wird erreicht, dass in der erreichten Sicherheitsstellung nicht alle Rotorblätter plötzlich einer bestimmten Anströmung des Windes mit einer bestimmten Anströmrichtung ausgesetzt sind, die zu einer Blattschwingung führen kann. Sind die Rotorblätter unterschiedlich ausgerichtet, so könnte zwar ein Rotorblatt eine ungünstige Anströmsituation erfahren, aber nicht alle Rotorblätter zugleich.

Alternativ ist eine Strategie vorgesehen, bei der die Rotorblätter so in ihrem Blattwinkel verstellt werden, dass sie auf gleiche Zielblattwinkel angeglichen werden, sollten sie zu Beginn des Sicherheitsstopps unterschiedliche Blattwinkel aufgewiesen haben. Hier ist besonders vorgesehen, dass eine sichere Position für die Windenergieanlage bestimmt wurde, die so entwickelt ist, dass sie für alle Rotorblätter möglichst lastarm ist und auch eine Situation vermeidet, bei der die Rotorblätter zum Schwingen angeregt werden. Sind nun die Blattwinkel der Rotorblätter zu Beginn des Sicherheitsstopps unterschiedlich eingestellt oder sollten beim Ausführen des Sicherheitsstopps unterschiedliche Blattwinkel aufgetreten sein, so kann dies hier angeglichen werden.

Besonders ist vorgeschlagen, dass das Angleichen so gesteuert wird, dass es auch dem Auftreten unterschiedlicher Blattwinkel entgegenwirkt, dass es also auch dem Divergieren der Blattwinkel entgegengewirkt. Das kann dadurch erreicht werden, dass alle Blattwinkel überwacht und mit ihrem Mittelwert verglichen werden. Je nachdem, ob sie über oder unter dem Mittelwert liegen, kann die Pitchrate entsprechend angepasst werden, um diese Abweichung wieder auszugleichen.

Gemäß einem Aspekt wird vorgeschlagen, dass die Windenergieanlage eine Betriebssteuerung und eine Sicherheitssteuerung aufweist und der Sicherheitsstopp von der Sicherheitssteuerung gesteuert wird und insbesondere das Anhalten des Rotors durch die Betriebssteuerung gesteuert wird, wenn kein Sicherheitsstopp vorliegt. Somit wird hier zwischen einer Sicherheitssteuerung und der Betriebssteuerung klar differenziert. Eine Sicherheitssteuerung weist höhere Sicherheitsanforderungen als eine Betriebssteuerung auf. Sie kann durch Redundanzen gekennzeichnet sein und/oder dadurch, dass sie Sicherheitsvorschriften erfüllt. Besonders kann sie als Sicherheitssteuerung zertifiziert sein.

Eine solche Sicherheitssteuerung kann sehr aufwendig sein, da sie über bestimmte abgesicherte teilweise redundante Kommunikationsprozesse verfügen muss. Außerdem kann sie über eine unterbrechungsfreie Stromversorgung versorgt werden, um ein weiteres Merkmal zu nennen. Tatsächlich ist dem Fachmann eine Sicherheitssteuerung aber bekannt und er kann sie klar von einer Betriebssteuerung abgrenzen.

Die Betriebssteuerung muss ein solch hohes Maß an Sicherheit nicht erfüllen und damit werden in einer Windenergieanlage alle Prozesse auf der Betriebssteuerung gesteuert, die keiner besonderen Sicherheitssteuerung bedürfen.

Davon ausgehend wird hier vorgeschlagen, dass das Anhalten des Rotors üblicherweise durch die Betriebssteuerung gesteuert wird, wie auch ansonsten die Drehzahl des Rotors durch die Betriebssteuerung gesteuert wird, das Verstellen seiner Rotorblätter in ihrem Blattwinkel durch die Betriebssteuerung gesteuert wird und auch der Generator hinsichtlich der gewünschten Leistung oder des gewünschten Drehmoments von der Betriebssteuerung gesteuert wird.

Ist aber ein Sicherheitsstopp vorgesehen, so wird dieser von der Sicherheitssteuerung gesteuert. Das beinhaltet auch, dass die Sicherheitssteuerung hier dazu ausgebildet ist, dass sie mehrere Steuerstrategien zum Ausführen des Sicherheitsstopps ausführen kann. Die Sicherheitssteuerung kann also diese mehreren Steuerstrategien auswählen bzw. entsprechende Einstellungen oder Veränderungen einer Steuerstrategie vornehmen, um dadurch unterschiedliche Steuerstrategien zum Ausführen des Sicherheitsstopps anwenden zu können. Entsprechend können mehrere Steuerstrategien durch die Sicherheitssteuerung umgesetzt werden und das Umsetzen all dieser Steuerstrategien mit der Sicherheitssteuerung erfüllt somit auch all die Kriterien, die eine Sicherheitssteuerung erfüllen muss.

Hier wurde besonders erkannt, dass die Sicherheitssteuerung dazu ertüchtigt werden kann, nicht nur einen vereinfachten Ablauf für einen Sicherheitsstopp durchzuführen, sondern gezielt unterschiedliche Strategien umsetzen kann. Dazu kann eine solche Strategie auf einem FPGA umgesetzt werden, der dann Teil der Sicherheitssteuerung ist. Es kommen aber auch andere Realisierungen in Betracht.

Gemäß einem Aspekt wird vorgeschlagen, dass zum Klassifizieren möglicher Auslöseereignisse unterschiedliche Auslöseklassen vorgesehen sind, ein auftretendes Auslöseereignis einer der Auslöseklassen zugeordnet wird, die Steuerstrategie in Abhängigkeit von der zugeordneten Auslöseklasse ausgewählt wird, und ein Sicherheitsstopp einer der Auslöseklassen zugeordnet ist, wobei insbesondere wenigstens drei Auslöseklassen vorgesehen sind.

Es wird also eine Klassifizierung vorgesehen, die unten noch näher erläutert wird, aus der dann je nach Auslöseereignis ausgewählt wird. Das Auslöseereignis wird also einer Auslöseklasse zugeordnet und dadurch wird besonders eine Eindeutigkeit der Handhabung erreicht, indem insbesondere jedes Auslöseereignis einer Auslöseklasse zugeordnet ist. Was auch immer passiert, kann somit einer Auslöseklasse zugeordnet werden und daraufhin kann besonders auch eindeutig zugeordnet werden, ob das Auslöseereignis ein Sicherheitsstopp ist oder nicht. Es ist nämlich dann ein Sicherheitsstopp, wenn es der entsprechenden Auslöseklasse des Sicherheitsstopps zugeordnet ist, ansonsten ist es kein Sicherheitsstopp. Ein Sicherheitsstopp kann dadurch gekennzeichnet oder definiert sein, dass er auf für den Sicherheitsstopp gesondert vorgesehener Hardware implementiert ist und/oder unter Verwendung gesondert vorgesehener Software für den Sicherheitsstopp.

Es sind wenigstens drei Auslöseklassen vorgesehen, was unterstreicht, dass insbesondere nicht nur eine einzige Auslöseklasse vorgesehen ist, dass also die Auslöseereignisse somit tatsächlich unterschiedlich zugeordnet werden können, nämlich wenigstens in drei Auslöseklassen.

Besonders kommen die folgenden Auslöseklassen in Betracht.

Gemäß einem Aspekt wird vorgeschlagen, dass ein Sicherheitsstopp dadurch gekennzeichnet ist, dass seine Auslöseereignisse als sicherheitsrelevante Auslöseereignisse hinterlegt sind und/oder seine Auslöseereignisse oder einige davon das Verletzen eines Sicherheitsgrenzwertes sind. Die Auslöseereignisse können als Software oder als Hardware hinterlegt sein, beispielsweise so, dass entsprechende Kriterien vorgesehen sind, die in der Software oder Hardware abgefragt werden und dann dazu führen, dass ein Auslöseereignis als sicherheitsrelevantes Auslöseereignis identifiziert wird, was zur Klassifizierung eines Sicherheitsstopps führt.

Als Auslöseklassen sind insbesondere die folgenden Auslöseklassen vorgesehen, von denen eine die Auslöseereignisse klassifiziert, die als sicherheitsrelevante Auslöseereignisse angesehen werden.

Eine erste Auslöseklasse eine ist, die als langsamer Trudelstopp bezeichnet werden kann und die Auslöseereignisse klassifiziert, die ein Anhalten der Anlage in einen Trudelbetrieb auslösen, wobei zum Anhalten die Rotorblätter mit einer Blattverstellgeschwindigkeit verstellt werden, die einen Mittelwert aufweist, der unter einem vorgebbaren ersten Grenzwert liegt.

Eine zweite Auslöseklasse eine ist, die als schneller Trudelstopp bezeichnet werden kann und die Auslöseereignisse klassifiziert, die ein Anhalten der Anlage in einen Trudelbetrieb auslösen, wobei zum Anhalten die Rotorblätter mit einer Blattverstellgeschwindigkeit verstellt werden, die einen Mittelwert aufweist, der über dem vorgebbaren ersten Grenzwert liegt, insbesondere über einem zweiten Grenzwert, der über dem ersten Grenzwert liegt.

Eine vierte Auslöseklasse eine ist, die einen Sicherheitsstopp auslöst und die Auslöseereignisse klassifiziert, die als sicherheitsrelevante Auslöseereignisse hinterlegt sind und/oder die durch das Verletzen eines Sicherheitsgrenzwertes durch einen Sensorwert entstehen.

Eine dritte Auslöseklasse eine ist, die als vollständiger Stopp bezeichnet werden kann und die Auslöseereignisse klassifiziert, die ein Anhalten der Anlage in einen Stillstand auslöst, ohne unter die vierte Auslöseklasse zu fallen.

Somit werden mehrere Auslöseklassen vorgeschlagen, von denen aber nur eine einen Sicherheitsstopp auslöst, von denen also nur eine zu sicherheitsrelevanten Auslöseereignissen gehört.

Gemäß einem Aspekt wird vorgeschlagen, dass die Auslöseklasse, die Auslöseereignisse zum Auslösen eines Sicherheitsstopps klassifiziert, mehrere Auslöseereignisse zum Auslösen eines Sicherheitsstopps aufweist. Dazu wird vorgeschlagen, dass die mehreren Auslöseereignisse priorisiert sind, sodass bei Vorliegen mehrerer der Auslöseereignisse, die einen Sicherheitsstopp auslösen, die Steuerstrategie verwendet wird, die von den vorliegenden Auslöseereignissen dem mit der höchsten Priorität zugeordnet ist.

Es geht hier also insbesondere um die vierte Auslöseklasse. Sie enthält mehrere Auslöseereignisse, die besonders entsprechend in Software oder anderweitig hinterlegt sind. Tritt ein Auslöseereignis auf, das in dieser vierten Auslöseklasse hinterlegt ist, wird in jedem Fall ein Sicherheitsstopp ausgeführt. Je nachdem, welches dieser in der vierten Auslöseklasse hinterlegten Auslöseereignisse auftritt, wird der Sicherheitsstopp auf unterschiedliche Art und Weise ausgeführt.

Treten nun mehrere Auslöseereignisse aus dieser vierten Auslöseereignisse auf, ständen mehrere Arten, wie der Sicherheitsstopp auszuführen wäre, als möglicher Konflikt gegenüber. Um das zu vermeiden, werden die Auslöseereignisse in dieser vierten Auslöseklasse priorisiert. Treten also beispielsweise das zweite und vierte Auslösekriterium gemäß Priorisierung in dieser vierten Auslöseklasse auf, erfolgt der Sicherheitsstopp gemäß dem, was für das zweite Auslöseereignis hinterlegt ist. Damit ist eindeutig festgelegt, wie der Sicherheitsstopp auszuführen ist.

Dabei wurde auch erkannt, dass selbst bei Sicherheitsstopps unterschiedliche Voraussetzungen vorliegen können. Beispielsweise kann bei einem Netzereignis, besonders einem Netzausfall, also einem Ausfall des elektrischen Versorgungsnetzes, das auch vereinfachend als Netz bezeichnet werden kann, ein langsamer Sicherheitsstopp verwendet werden. Je nach Windbedingungen während des Netzausfalls kann es zu einer hohen Rotorbeschleunigung und entsprechend hoher Rotordrehzahl kommen. Wenn durch die Rotordrehzahl dann ein Überdrehzahlgrenzwert einer entsprechenden Sicherheitssteuerung bei Überdrehzahl überschritten wird, wird dieser Sicherheitssteuerung bei Überdrehzahl eine höhere Priorität zugeordnet. Es wird dann auf ein schnelleres Profil gewechselt, das nämlich der Sicherheitssteuerung bei Überdrehzahl zu Grunde liegt bzw. in dieser Sicherheitssteuerung bei Überdrehzahl implementiert ist.

Außerdem oder alternativ wird vorgeschlagen, dass die Steuerstrategie im Verlauf des Sicherheitsstopps gewechselt wird, wenn wenigstens ein Auslöseereignis mit gegenüber den übrigen vorliegenden Auslöseereignissen höherer Priorisierung hinzukommt oder wegfällt.

Somit wurde erkannt, dass auch während des Ausführens eines Sicherheitsstopps ein weiteres Auslöseereignis, das ebenfalls einen Sicherheitsstopp auslöst, hinzukommen kann. Ist dies von geringerer Priorität als das Auslöseereignis, was zur Auslösung des gerade umgesetzten Sicherheitsstopps führt, ändert sich nichts. Hat dieses neue Auslöseereignis aber eine höhere Priorität, so kann die Strategie auch im laufenden Verfahren gewechselt werden.

Oben wurde bereits ein Beispiel genannt, bei dem zunächst ein Netzausfall eine Sicherheitssteuerung auslöst, nämlich eine Sicherheitssteuerung bei Netzausfall, wobei eine sich anschließende Sicherheitssteuerung bei Überdrehzahl eine höhere Priorität hat und daher auf diese gewechselt wird. Es wird dabei während des Ausführens des Sicherheitsstopps, also während des Ausführens der Sicherheitssteuerung bei Netzausfall auf die Steuerstrategie gewechselt, nämlich durch Wechseln auf die Sicherheitssteuerung bei Überdrehzahl.

Insoweit werden auch hierfür die Auslöseereignisse dieser vierten Auslöseklasse priorisiert, also in eine Reihenfolge gebracht und abhängig davon kann die entsprechend zugeordnete Strategie zum Umsetzen des Sicherheitsstopps nach dieser Priorisierung ausgewählt werden. Besonders wird eine eindeutige Zuordnung erreicht und es wird vermieden, dass ein Sicherheitsstopp höchster Priorität nicht ausgeführt wird, weil ein Sicherheitsstopp geringerer Priorität gerade ausgeführt wird.

Gemäß einem Aspekt ist vorgesehen, dass zum Verstellen der Rotorblätter ein Pitch system vorhanden ist, in dem Pitchsystem eine Default-Trajektorie hinterlegt ist und zum Verstellen der Rotorblätter die Default-Trajektorie verwendet wird, wenn das Pitchsystem seine Kommunikationsverbindung zum Sicherheitssystem verliert, wobei ansonsten statt der Verwendung der Default-Trajektorie das Verstellen der Rotorblätter beim Sicherheitsstopp durch das Sicherheitssystem vorgegeben wird. Besonders kann dann statt der Default-Trajektorie der Sicherheitsstopp je nach hinterlegter Strategie erfolgen. Dazu können als Teil der Strategien besonders zu Auslöseereignissen der vierten Auslöseklasse entsprechende Trajektorien zum Verstellen der Rotorblätter hinterlegt sein.

Das Pitchsystem kann besonders aus entsprechenden Pitchantrieben, also Verstellantrieben, für die Rotorblätter bestehen, die über eine zentrale Substeuereinheit des Pitch systems angesteuert werden. Eine solche zentrale Substeuereinheit ist somit Teil des Pitchsystems und kann besonders dort in einem Element des aerodynamischen Rotors, insbesondere der Rotornabe und/oder dem Spinner, angeordnet sein. Zusätzlich kann eine Notstromversorgung vorhanden sein, die für einen begrenzten Zeitraum das Verstellen der Rotorblätter ermöglicht, auch wenn eine elektrische Versorgung der Windenergieanlage, insbesondere der Pitchantriebe auf andere Art und Weise zusammengebrochen ist. Ein solches Pitchsystem kann also autark ausgebildet sein, jedenfalls für eine zeitlich begrenzte Verstellaktivität. Die zentrale Substeuereinheit kann beispielsweise als FPGA ausgebildet sein.

Tritt nun ein Fehler auf, der zu einem Sicherheitsstopp führt, wird grundsätzlich nach der geeigneten Strategie zum Ausführen dieses Sicherheitsstopps gesucht, nämlich insbesondere aus den hinterlegten Strategien je nach Auslöseereignis eine ausgewählt. All dies kann auf dem Sicherheitssystem implementiert sein, das Teil der Anlagensteuerung sein kann, oder ihr überlagert sein kann. Dort können also diese Strategien hinterlegt sein. Von diesem Sicherheitssystem bzw. der Anlagensteuerung erfolgt dann die Steuerung der Blattverstellung über das Pitchsystem. Es wird dabei also die entsprechend ausgewählte Strategie übertragen und umgesetzt.

Bricht aber die Kommunikation zwischen dem Pitchsystem und dem Sicherheitssystem zusammen, so kann die gewünschte Strategie nicht mehr ausgewählt und an das Pitch system übertragen werden. In diesem Fall wird die Default-Trajektorie verwendet. Eine solche Default-Trajektorie kann synonym auch als Notfall-Trajektorie oder Trajektorie bei Kommunikationsausfall oder einfach Standard-Trajektorie bezeichnet werden. Diese Standard-Trajektorie ist also hinterlegt, nämlich im Pitchsystem, und kann ausgewählt werden, wenn die Kommunikationsverbindung zusammenbricht. Dadurch wird erreicht, dass in jedem Fall ein Sicherheitsstopp ausgeführt werden kann, wenn auch nicht unbedingt mit der geeignetsten Trajektorie.

Gemäß einem Aspekt wird vorgeschlagen, dass ein Sicherheitsstopp nur in Abhängigkeit von einem Signal ausgelöst wird, das wenigstens ein vorbestimmtes Sicherheitskriterium erfüllt und als Sicherheitssignal bezeichnet werden kann, wobei insbesondere das Sicherheitssignal redundant ausgeführt ist und/oder als Sicherheitssignal zertifiziert ist.

Besonders geht es darum, dass ein Sicherheitsstopp nicht durch eine Fehlauslösung ausgelöst werden soll. Sämtliche Auslöseereignisse, die zu einem Sicherheitsstopp führen, sind vorzugsweise in einem Sicherheitssystem implementiert bzw. hinterlegt, das gegenüber der üblichen Anlagensteuerung erhöhte Kriterien hinsichtlich Sicherheit erfüllen muss. Zu solchen Kriterien gehören die Verwendung von Komponenten mit hoher Ausfallsicherheit, das Implementieren von Sicherheitsüberprüfungen, die Fehlfunktionen verhindern, und auch das Erzeugen und Weiterleiten von Sicherheitssignalen, die über geeignete Sicherheitsverbindungen übertragen werden, die eine Störung der Signalübertragung vermeiden und gegen eine Ausfallsicherheit geschützt sind. Insbesondere ist ein Kriterium, dass eine Übertragung zwischen wenigstens einem Sender und einem Empfänger so realisiert ist, dass der Empfänger erkennt, wenn der wenigstens eine Sender ausgefallen ist. Ein solcher erkannter Ausfall führt dann zu einem Sicherheitsstopp. Vorzugsweise kann dazu vorgesehen sein, dass ein solcher Ausfall erst nach einer vorbestimmten Toleranzzeit nach seinem Erkennen den Sicherheitsstopp auslöst. Eine solche Toleranzzeit kann durch eine vorbestimmte Anzahl von Kommunikationsintervallen definiert sein.

Somit wird ein Sicherheitsstopp nur durch solche Sicherheitssignale ausgelöst und das unterstreicht, dass ein solcher Sicherheitsstopp erhöhte Anforderungen gegenüber anderen Anhaltevorgängen der Windenergieanlage erfüllt.

Gemäß einem Aspekt wird vorgeschlagen, dass die den Sicherheitsstopp auslösenden Auslöseereignisse ausgewählt sind aus der Liste aufweisend:
- eine Drehzahl überschreitet eine vorbestimmte Grenzdrehzahl, welche insbesondere bei Überschreiten einen Sensorfehler anzeiget,
- eine Turmschwingung und/oder Turmbeschleunigung übersteigt einen vorbestimmten Turmschwingungsgrenzwert bzw. einen vorbestimmten Turmbeschleunigungsgrenzwert,
- eine Blattwinkeldifferenz zwischen zwei der Rotorblätter überschreitet einen vorbestimmten Differenzwinkelgrenzwert,
- der Blattwinkel mindestens eines Rotorblattes unterschreitet einen vorbestimmten minimalen Blattwinkel,
- ein Notstopp-Schalter wird betätigt,
- eine Generatorschwingung liegt über einem vorbestimmten Generatorschwingungsgrenzwert,
- ein Netzfehler tritt auf, und/oder eine Netztrennung,
- eine erfasste Pitchrate weicht von einer in Abhängigkeit einer erfassten Rotordrehzahl zu erwartenden Pitchrate um mehr als eine vorbestimmte maximale Abweichungsrate ab,
- eine erfasste Rotorblattschwingung übersteigt einen vorbestimmten Grenzwert, und
- eine erfasste Schräganströmung überschreitet ein vorbestimmtes Schräganströmungsmaß.

Bei dem Auslösekriterium, dass die erfasste Pitchrate von der zu erwartenden Pitchrate um mehr als die vorbestimmte maximale Abweichungsrate abweicht, ist Folgendes zu erläutern. Hier liegt eine Sicherheitsfunktion zu Grunde, welche die Ist-Pitchrate anhand der Rotorgeschwindigkeit, die synonym als Rotordrehzahl bezeichnet werden kann, plausibilisiert, also überprüft, ob die Pitchrate im Lichte der Rotordrehzahl plausibel ist. Z.B. wird ein Sicherheitsstopp ausgelöst, wenn bei hoher Drehzahl, die insbesondere über Nenndrehzahl liegt, doch noch weiter nach vorne gepitcht wird, also in den Wind gepitcht wird, was zu einer weiteren Zunahme der Rotordrehzahl führen würde. Die vorbestimmte maximale Abweichungsrate kann dabei dynamisch vorbestimmt sein und von der konkreten Situation abhängen.

Gemäß einem Aspekt wird vorgeschlagen, dass dann, wenn das Auslöseereignis einen Sicherheitsstopp auslöst, das Auslöseereignis identifiziert wird und ein zeitliches Pitchratenprofil in Abhängigkeit von dem identifizierten Auslöseereignis ausgewählt oder eingestellt wird. Außerdem oder alternativ wird ein zeitliches Generatorprofil in Abhängigkeit von dem identifizierten Auslöseereignis ausgewählt oder eingestellt, wobei das zeitliche Generatorprofil einen zeitlichen Verlauf eines Generatormoments oder einer Generatorleistung bezeichnet.

Das Auswählen des zeitlichen Pitchratenprofils und/oder des zeitlichen Generatorprofils kann aus entsprechend hinterlegten Pitchratenprofilen bzw. Generatorprofilen erfolgen. Es kann aber auch eine Einstellung vorgenommen werden, indem beispielsweise ein Parameter eingestellt oder verstellt wird, was sowohl für das Pitchratenprofil als auch für das Generatorprofil gelten kann. Ein solcher Parameter kann bspw. eine Verstellrate sein, oder es können mehrere Parameter sein, die Eckpunkte eines Profils angeben.

Das Auswählen erfolgt in Abhängigkeit von dem identifizierten Auslöseereignis. Dazu kann besonders das Auslöseereignis eines von mehreren aus der vierten Auslöseklasse sein. Über ein zeitliches Pitchratenprofil kann besonders festgelegt werden, wie schnell die Rotorblätter verstellt werden, was auch einschließt, wie schnell die Rotorblätter beim Verstellen beschleunigt werden und zum Zielwert hin wieder abgebremst werden.

Zudem wurde erkannt, dass aufgrund der Verstellung der Rotorblätter insbesondere basierend auf dem Pitchratenprofil die zu erwartende Veränderung des durch den Wind hervorgerufenen aerodynamischen Rotormoments bekannt ist oder bestimmt werden kann. Daran angepasst kann, besonders, um eine Drehzahlreduzierung zu erreichen oder ihr nicht entgegenzustehen, die Ansteuerung des Generators entsprechend angepasst werden.

Es kann bspw. vorgesehen sein, ein maximales Drehmoment, eine andere Kennlinie, insbesondere Drehzahl-Drehmoment-Kennlinie, und/oder Rampe für das Drehmoment vorzugeben. Bei Fehlern im elektrischen System oder einem Lastabwurf kann ein anderes zeitliches Profil für das Generatormoment vorgegeben werden. Besonders wird vorgeschlagen, das Generatormoment entsprechend über ein zeitliches Generatorprofil einzustellen, denn das kann besonders auf das aerodynamische Rotormoment, dem das Generatormoment entgegensteht, angepasst werden. Je nach implementierter Steuerung kommt aber auch in Betracht, dass statt der Vorgabe eines Verlaufs des Generatormoments ein Verlauf einer Generatorleistung vorgegeben wird. Aber auch da liegt dann im Ergebnis das Verändern des Generatormoments zugrunde und damit auch ein zeitlicher Verlauf eines Generatormoments, auch wenn dieser nicht ausdrücklich festgelegt ist.

Gemäß einem Aspekt wird vorgeschlagen, dass das Anhalten des Rotors durch den Sicherheitsstopp so gesteuert wird, dass eine oder mehrere vorbestimmte Lastgrenzen nicht überschritten, insbesondere aber erreicht oder zu wenigstens 90 % erreicht werden. Besonders wird vorgeschlagen, dass der Rotor so angehalten wird, dass die Anlage sich nahe an solchen Lastgrenzen befindet. Damit kann der Sicherheitsstopp möglichst schnell ausgeführt werden, aber nur so schnell, dass keine mechanischen Schäden oder übermäßigen mechanischen Belastungen auftreten.

Insbesondere sind die Lastgrenzen ausgewählt aus wenigstens einer der folgenden Lasten. Diese Lasten umfassen eine maximale Blattlast der Rotorblätter, eine maximale Blattschwingungsamplitude, also auch der Rotorblätter, eine maximale Turmbiegung, eine maximale Turmschwingungsamplitude, eine maximale Turmbeschleunigung und eine maximale Rotorwellenbiegung oder Achszapfenbiegung eines den Rotor tragenden Achszapfens.

Somit ist besonders vorgesehen, solche Lasten zu erfassen und abhängig davon den Sicherheitsstopp zu steuern, insbesondere so, dass die Anlage sich nahe an entsprechenden Lasten befindet, möglichst kurz unterhalb entsprechender Lastgrenzen.

Es kommt aber auch in Betracht, dass basierend auf Vorberechnungen und/oder Vorsimulationen, die vor Inbetriebnahme der Windenergieanlage durchgeführt werden können, die entsprechenden Lasten vorbestimmt werden. So kann beispielsweise bei einer bestimmten Windgeschwindigkeit, gegebenenfalls unter Berücksichtigung von Turbulenzen und anderen Variationen der Windgeschwindigkeit, eine entsprechende Last bestimmt werden bzw. bekannt sein. Diese Last verändert sich mit dem Durchführen des Sicherheitsstopps, insbesondere mit dem Verändern der Blattwinkel der Rotorblätter. Durch entsprechende Voruntersuchungen oder Vorsimulationen kann dabei auch vorbestimmt werden, wie sich die Lasten mit der Veränderung der Blattwinkel und/oder Rotordrehzahl verändern und darauf basierend kann ein solcher Sicherheitsstopp geplant werden, bei dem die besagten Lasten noch gerade eingehalten werden.

Besonders kann aus der Verstellung der Rotorblätter und/oder der Rotordrehzahl zusammen mit dem vorherrschenden Wind ein Lastprofil vorbestimmt werden und das Verstellen der Rotorblätter und/oder der Rotordrehzahl, was auch unter Verwendung des Generatormoments bzw. der Generatorleistung beeinflusst werden kann, so angepasst werden, dass die Lasten gerade eingehalten werden. Ergibt sich also aus einer Simulation, dass sich zu einem bestimmten Abschnitt der zunächst gewählten Trajektorie zum Verstellen der Rotorblätter eine Lastüberschreitung ergibt, wird diese Trajektorie entsprechend angepasst. Gleiches gilt, wenn die Lasten weit unterschritten werden, sodass dann eine solche Anpassung vorgenommen werden kann, dass die Lasten noch erhöht werden können, was mit einer Beschleunigung des Verfahrens einhergehen wird.

Gemäß einem Aspekt wird vorgeschlagen, dass das Steuern des Sicherheitsstopps durch das Sicherheitssystem in eine Regelung eingebunden ist, sodass das Anhalten des Rotors, insbesondere ein Verstellen der Rotorblätter und/oder das Steuern eines Generatormoments bzw. einer Generatorleistung in Abhängigkeit von wenigstens einer erfassten oder geschätzten Last so erfolgt, dass diese wenigstens eine Last jeweils einen vorbestimmten Lastgrenzwert einhält. Es wird somit ausdrücklich das Erfassen und damit Rückführen einer Last vorgeschlagen. Die Last kann dadurch eingehalten werden und gleichzeitig kann der Sicherheitsstopp auch so ausgeführt werden, dass die Anlage nahe an der jeweiligen Lastgrenze ist. Es braucht also kein großer Sicherheitsabstand zur Berücksichtigung von Unsicherheiten eingehalten zu werden, da die jeweilige Last erfasst wird.

Besonders wurde erkannt, dass eine solche Regelung auch für den Sicherheitsstopp und insbesondere in einer Sicherheitssteuerung realisiert werden kann.

Das Erfassen der Last kann beispielsweise durch das Messen der Last erfolgen, indem entsprechende Lastsensoren verwendet werden. Besonders Dehnungsmessstreifen im Bereich der Blattwurzel kommen hierfür in Betracht. Eine Erfassung ohne unmittelbare Messung einer Last kann beispielsweise durch Auswertung der Drehzahl, insbesondere durch Auswertung von Beschleunigungen in der Drehzahl erfasst werden. Es können auch Beschleunigungssensoren, wie ein Gyroskop, verwendet werden.

Gemäß einem Aspekt wird vorgeschlagen, dass das Sicherheitsverfahren zum Ausführen des Sicherheitsstopps so ausgeführt ist, insbesondere redundant ausgeführt ist, dass der Sicherheitsstopp auch bei Ausfall der Betriebssteuerung durch das Sicherheitssystem ausgeführt werden kann. Besonders zeichnet dies einen Sicherheitsstopp im Vergleich zu anderen Haltevorgängen der Windenergieanlage aus. Es ist also das Ausführen des Sicherheitsstopps in dieser ausfallsicheren Art und Weise vorgesehen, wobei gleichzeitig aber unterschiedliche Auslöseereignisse für die Sicherheitsstopps berücksichtigt und entsprechend ein angepasster Sicherheitsstopp ausgeführt wird. Es können also trotz der Berücksichtigung der Sicherheitskriterien unterschiedliche Strategien ausgeführt werden.

Außerdem oder alternativ wird vorgeschlagen, dass das Sicherheitssystem dazu zertifiziert ist, einen Sicherheitsstopp auch bei Ausfall der Betriebssteuerung sicher zu steuern. Solche Zertifizierungen qualifizieren ein Sicherheitssystem als solches und damit den Sicherheitsstopp als solchen. Auch hier ist vorgesehen, dass trotz einer solchen Zertifizierung bei einem Sicherheitsstopp unterschiedliche Strategien angewendet werden können.

Außerdem oder alternativ ist vorgesehen, dass das Sicherheitssystem der Betriebssteuerung übergeordnet ist, sodass das Sicherheitssystem die Betriebssteuerung überwacht. Hier wurde besonders erkannt, dass die meisten Steuerungsvorgänge der Windenergieanlage auf dem Betriebssystem arbeiten. Besondere Sicherheitsüberlegungen führen dazu, dass der Betriebssteuerung, also insoweit der normalen Betriebssteuerung, die keine besonderen Sicherheitsmerkmale aufweisen muss, ein Sicherheitssystem überlagert ist. Ein solches Sicherheitssystem, das der Betriebssteuerung überlagert ist, kann insbesondere Fehler und Ausfälle erkennen und dann etwaige Notmaßnahmen einleiten und auch entsprechende Warnsignale erzeugen.

Für ein solches Sicherheitssystem wird vorgeschlagen, dass dieses den Sicherheitsstopp ausführt und dabei auch, je nach Auslöseereignis, unterschiedliche Strategien realisieren kann. Für den Sicherheitsstopp wird also das Sicherheitssystem verwendet, das für den Sicherheitsstopp unterschiedliche Strategien anwenden kann.

Gemäß einem Aspekt wird vorgeschlagen, dass die Steuerstrategie zusätzlich in Abhängigkeit von wenigstens einem Betriebszustand der Windenergieanlage beim Eintritt des Auslöseereignisses ausgewählt wird. Optional wird dazu vorgeschlagen, dass die Steuerstrategie während des Steuerns des Sicherheitsstopps angepasst wird, insbesondere in Abhängigkeit von wenigstens einem laufenden erfassten Betriebszustand angepasst wird.

Hier wurde erkannt, dass nicht nur das Auslöseereignis, also der Fehler, der einen Sicherheitsstopp erforderlich macht, für die Art der Ausführung des Sicherheitsstopps wichtig sein kann. Insbesondere umfasst ein Betriebszustand, in dessen Abhängigkeit die Steuerstrategie zusätzlich ausgewählt oder angepasst wird, die aktuelle Drehzahl und/oder die aktuell eingestellten Blattwinkel. In Abhängigkeit von der Drehzahl können die Rotorblattwinkel und/oder das Generatormoment, alternativ die Generatorleistung, so gesteuert werden, dass die Rotordrehzahl möglichst schnell reduziert wird, insbesondere je nach Auslöseereignis, also je nach Fehler, der zum Ausführen des Sicherheitsstopps führt. Ist die Drehzahl bereits gering, können die Blattwinkel und/oder das Generatormoment bzw. die Generatorleistung anders gesteuert werden als wenn die Drehzahl noch hoch wäre.

Ebenfalls sind die aktuell eingestellten Blattwinkel von Relevanz. Dabei ist zu beachten, dass das Verstellen der Blattwinkel über eine Verstellrate erfolgen kann und diese Verstellrate kann in Abhängigkeit von dem Anfangsblattwinkel ausgewählt und dann weiter gesteuert werden.

Auch das Berücksichtigen einer aktuellen Anlagenleistung bzw. Generatorleistung kann zum Auswählen bzw. Einstellen der Steuerstrategie verwendet werden. Insoweit ist zu wiederholen, dass das Auswählen der Steuerstrategie auch ihr Einstellen betreffen kann. Sie muss also nicht als vollständig implementierte Steuerstrategie aus einem Speicher abgerufen werden, sondern es kann auch in Betracht kommen, dass lediglich konkrete Parameter eingestellt werden, um dadurch eine Variation der Steuerstrategie und damit unterschiedliche Steuerstrategien zu erhalten. Jedenfalls kann die Anfangsgeneratorleistung, die also im Moment des Auftretens des Auslöseereignisses vorliegt, für das Durchführen des Sicherheitsstopps relevant sein, denn je höher die Anlagenleistung in dem Moment ist, umso mehr Leistung muss dann gegebenenfalls abgeführt werden.

Insoweit ist hier auch relevant, dies in Kombination mit dem Auslöseereignis zu berücksichtigen. Ist das Auslöseereignis ein Wegfall des elektrischen Versorgungsnetzes, kann die elektrische Leistung nicht eingespeist werden und muss anderweitig abgeführt werden, sodass in diesem Fall anders vorgegangen werden muss als wenn das elektrische Versorgungsnetz beim Ausführen des Sicherheitsstopps noch zur Verfügung stände, um nur ein Beispiel zu nennen.

Besonders kann die Steuerstrategie auch im laufenden Vorgang, also beim Herunterfahren der Windenergieanlage im Rahmen des Sicherheitsstopps, angepasst werden. Zwar sollte die Steuerstrategie möglichst von vornherein bis zum vollständigen Anlagenstopp vorgeplant sein, es können aber Änderungen oder Variationen auftreten, die vorzugsweise berücksichtigt werden. Eine Variation kann sein, dass das anfänglich noch vorhandene elektrische Versorgungsnetz Leistung aufnehmen kann; fällt diese Möglichkeit aber im laufenden Sicherheitsstopp weg, weil beispielsweise Sicherheitsschalter die Verbindung trennen, kann die Steuerstrategie angepasst werden.

Auch Windvariationen können dazu führen, dass besonders die gemäß der Steuerstrategie vorgesehene Drehzahlreduzierung anders als vorgeplant verläuft. Auch die Lasten können in Abhängigkeit von dem Wind, nicht nur der Windgeschwindigkeit, sondern auch Turbulenzen, variieren und können dann durch eine Anpassung der Steuerstrategie Berücksichtigung finden.

Gemäß einem Aspekt wird vorgeschlagen, dass das Sicherheitssystem zum Steuern des Sicherheitsstopps einen für ein Sicherheitssystem zertifizierten Mikrocontroller und/oder eine für ein Sicherheitssystem zertifizierte Kommunikations-Hardware aufweist und damit verwendet. Solche Mikrocontroller, die auch in der Fachwelt als sichere Mikrocontroller bezeichnet werden, und ebenso eine entsprechende Kommunikations-Hardware, die in der Fachwelt ebenfalls als sichere Kommunikations-Hardware bezeichnet wird, sollte hier eingesetzt werden. Ein solcher zertifizierter Mikrocontroller zeichnet sich besonders dadurch aus, dass er eine gegenüber normalen Mikrocontrollern verringerte Fehleranfälligkeit hat und das kann besonders durch eine entsprechende Zertifizierung sichergestellt werden und/oder durch eine redundante Ausführung, bei der in einem Fehlerfall ein gestarteter Prozess dennoch zu Ende ausgeführt werden kann.

Gleiches gilt für die Kommunikations-Hardware, die sich auch besonders durch eine Redundanz auszeichnen kann. Zur Kommunikations-Hardware können auch entsprechende störsichere Leitungen zählen sowie eine sichere, insbesondere redundante Hardware, über die die Kommunikation gesteuert wird.

Als Mikrocontroller kann beispielsweise ein FPGA (Field Programmable Gate Array) verwendet werden.

Erfindungsgemäß wird auch eine Windenergieanlage vorgeschlagen, wobei
- die Windenergieanlage einen aerodynamischen Rotor mit in ihrem Blattwinkel verstellbaren Rotorblättern aufweist, und
- der Rotor mit einer variablen Rotordrehzahl betreibbar ist, wobei die Windenergieanlage dazu vorbereitet ist, dass
- zum Anhalten des Rotors die Rotorblätter in Richtung zu einer Fahnenstellung hin verstellt werden,
- das Anhalten durch ein Auslöseereignis ausgelöst wird und
- wenn in Abhängigkeit vom Auslöseereignis ein Sicherheitsstopp ausgelöst wird, zusätzlich in Abhängigkeit von dem Auslöseereignis eine von mehreren Steuerstrategien zum Ausführen des Sicherheitsstopps ausgewählt wird.

Besonders wird vorgeschlagen, dass die Windenergieanlage eine Anlagensteuerung aufweist, und dass die Windenergieanlage, insbesondere diese Anlagensteuerung, dazu vorbereitet ist, ein Verfahren nach einem der vorstehend erläuterten Aspekte auszuführen. Die Windenergieanlage kann insbesondere dadurch dazu vorbereitet sein, solche Verfahren auszuführen, dass diese Verfahren auf der Anlagensteuerung implementiert sind. Die Anlagensteuerung kann dabei auch mehrere Einheiten, auch in der Windenergieanlage verteilte Einheiten, umfassen.

Insbesondere weist die Anlagensteuerung eine Betriebssteuerung und eine der Betriebssteuerung überlagerte Sicherheitssteuerung auf. Die Betriebssteuerung ist insbesondere dazu vorgesehen, die Windenergieanlage im laufenden Betrieb zu steuern. Die Sicherheitssteuerung wird dazu verwendet, einen Sicherheitsstopp auszuführen. Insbesondere ist die Sicherheitssteuerung als eine solche zertifiziert.

Die Erfindung wird nachfolgend exemplarisch unter Bezugnahme auf die begleitenden Figuren näher erläutert.
- Figur 1: zeigt eine Windenergieanlage in einer perspektivischen Darstellung.
- Figuren 2 - 5: zeigen Zeitdiagramme für unterschiedliche Stoppvorgänge zum Anhalten einer Windenergieanlage.
- Figur 6: zeigt Zeitdiagramme für zwei unterschiedliche Sicherheitsstoppvorgänge.
- Figur 7: zeigt schematisch eine Anlagensteuerung mit einer Betriebssteuerung und mit einer dieser Anlagensteuerung überlagerten Sicherheitssteuerung.

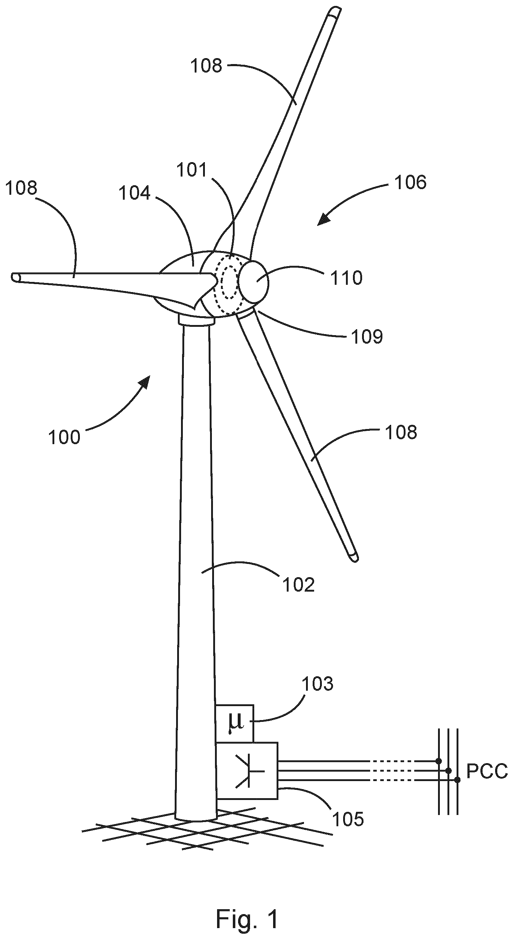

**Figur 1** zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

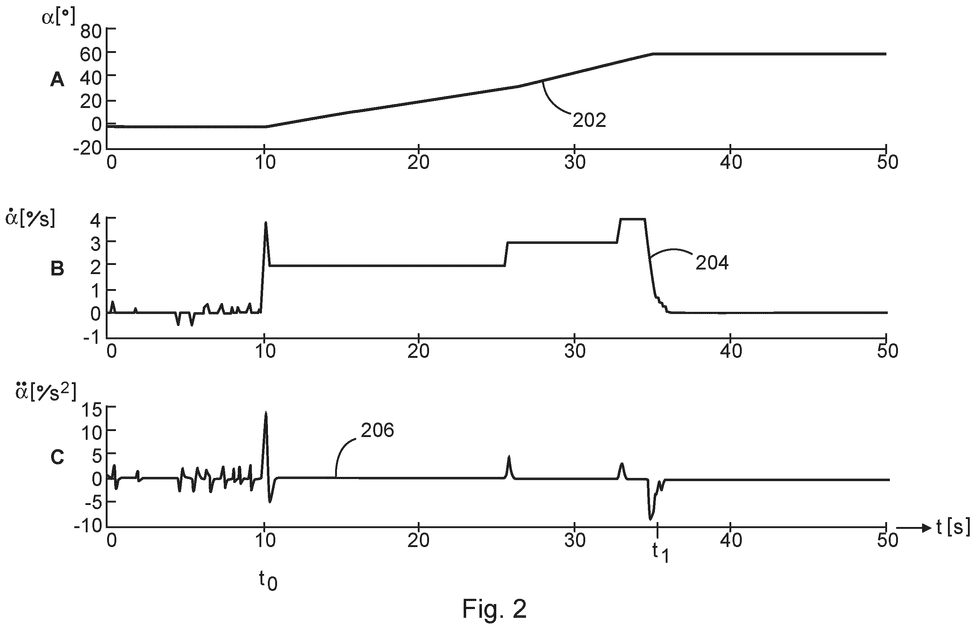

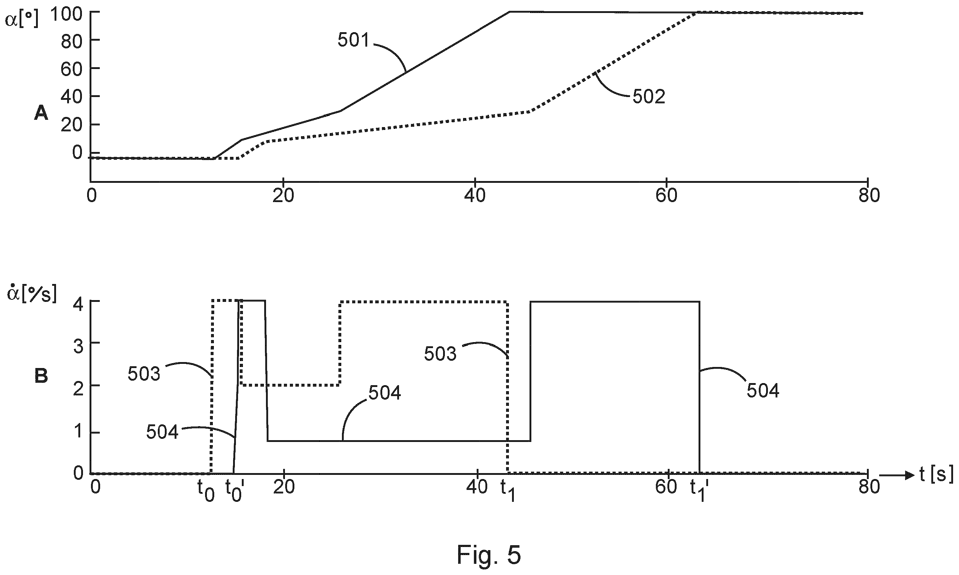

Die Figuren 2 bis 5 zeigen ein Blattwinkeldiagramm A als oberstes Diagramm, in dem ein Blattwinkelverlauf 202 dargestellt ist, und ein Pitchratendiagramm B als zweites Diagramm von oben, in dem ein Pitchratenverlauf 204 dargestellt ist. In den Figuren 2 bis 4 ist zusätzlich noch ein Beschleunigungsdiagramm C als drittes Diagramm dargestellt, in dem ein Beschleunigungsverlauf 206 der Beschleunigung der Blattwinkel dargestellt ist. Lediglich in Figur 5 fehlt das Beschleunigungsdiagramm. Die Bezugszeichen des Blattwinkelverlaufs 202, des Pitchratenverlaufs 204 und des Beschleunigungsverlaufs 206 sind zur besseren Vergleichbarkeit für die Figuren 2 bis 5 gleich gewählt, obwohl natürlich unterschiedliche Verläufe dargestellt sind.

**Figur 2** zeigt dabei einen Standardanhaltevorgang, der auch als Anhalteprozedur "Standardstopp" bezeichnet werden kann. Hierbei wird die Windenergieanlage in einen aktiv geregelten Trudelbetrieb gebracht. Zum Zeitpunkt t₀ startet der Anhaltevorgang und hat zum Zeitpunkt t₁ im Grunde sein Ziel erreicht, wobei dann die Anlage in dem Trudelbetrieb gehalten wird.

Zum Zeitpunkt t₀ wird somit der Blattwinkel von etwa 0° auf etwa 60° erhöht, die er bei t₁ erreicht.

In dem Pitchratendiagramm B der Figur 2 ist zu erkennen, dass sich die Verstellrate im Laufe des Anhaltevorgangs erhöht. Kurz vor Erreichen der Zielzeit t₁ ist die Verstellrate am höchsten. Im Beschleunigungsdiagramm C ist zu erkennen, dass der Beschleunigungsverlauf 206 jeweils Spitzen aufweist, wenn sich die Blattverstellrate sprunghaft ändert.

Gemäß dem Standardstopp der Figur 2 wird die Windenergieanlage somit in den aktiv geregelten Trudelbetrieb gebracht, indem der Blattwinkel 60° oder mehr aufweist. Im aktiven Trudelbetrieb dreht sich der Rotor je nach Windgeschwindigkeit mit geringer Drehzahl, die eine maximale Trudeldrehzahl erreichen kann, oder der Rotor steht bei völliger Windstille still. Der aktive Trudelbetrieb erlaubt es, die Windenergieanlagen schonend in einem Zustand zu halten, um sie schnell wieder starten zu können. Die maximale Trudeldrehzahl ist in der Anlagensteuerung parametrisierbar. Überschreitet die Windenergieanlage, also die Rotordrehzahl, die Trudeldrehzahl, werden die Blätter zurückgefahren, also weiter in Richtung zur Fahnenstellung verstellt.

Ein solcher Standardstopp braucht nicht als Sicherheitsstopp ausgeführt zu werden und auch nicht in einer Sicherheitssteuerung implementiert zu werden.

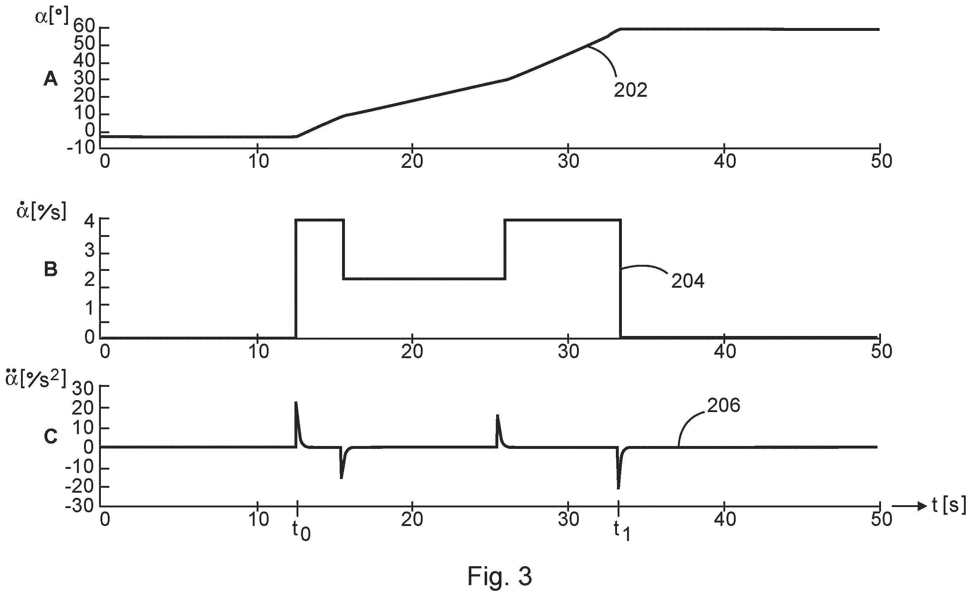

**Figur 3** zeigt einen schnellen Anhaltevorgang, der auch als Anhalteprozedur "Fast stop" bezeichnet werden kann. Auch dieser schnelle Anlagenstopp hält die Windenergieanlage in dem aktiven Trudelbetrieb an. Im Vergleich zum Standardstopp gemäß Figur 2 findet die Blattverstellung mit erhöhter Geschwindigkeit statt. Besonders im Pitchratenverlaufsdiagramm B ist an dem Pitchratenverlauf 204 zu erkennen, dass die Blattverstellrate zum Zeitpunkt t₀, wenn der schnelle Anlagenstopp gestartet wird, zunächst auf einen hohen Wert springt. Nach einer Zeit kann sie etwas abfallen, um eine zu hohe Belastung zu vermeiden. Zur Zielzeit t₁ hin kann die Pitchrate wieder einen hohen Wert annehmen, wie dem Pitchratenverlauf 204 zu entnehmen ist. Entsprechend schnell verändert sich der Blattwinkel gemäß dem Blattwinkelverlauf 202 von einem Wert etwa bei 0° zu einem Wert etwa bei 60°.

In dem Beschleunigungsverlauf 206 sind die Veränderungen zwischen den unterschiedlichen Blattverstellraten durch entsprechende Peaks zu erkennen.

Auch bei dem Schnellanhaltevorgang gemäß Figur 3 dreht sich der Rotor im aktiven Trudelbetrieb je nach Windgeschwindigkeit mit geringer Drehzahl, bis zu einer maximalen Trudeldrehzahl, oder steht bei völliger Windstille still.

Der schnelle Anhaltevorgang gemäß Figur 3 braucht ebenfalls nicht auf einer Sicherheitssteuerung implementiert zu werden und somit auch nicht als Sicherheitsstopp ausgeführt zu werden.

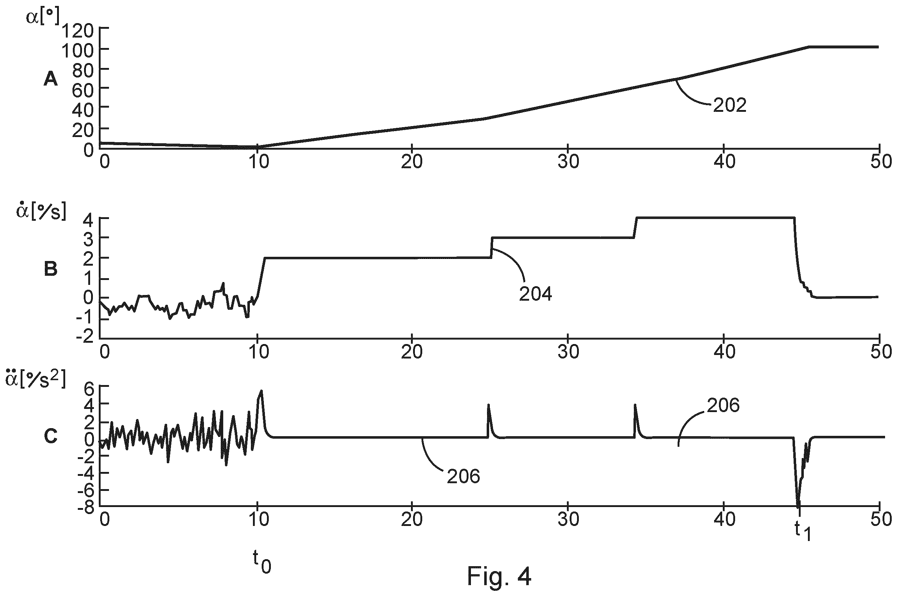

**Figur 4** zeigt einen vollständigen Stopp, was auch als Anhalteprozedur "Full stop" bezeichnet werden kann. Dieser vollständige Anhaltevorgang hält die Windenergieanlage in Fahnenstellung an. In Fahnenstellung erzeugen die Rotorblätter auch bei Wind keinen Auftrieb und der Rotor steht still oder bewegt sich nur ganz leicht. Die Fahnenstellung kann abhängig sein vom Anlagentyp, also dem Typ der Windenergieanlage, und liegt im Bereich zwischen 90° und 100°.

Figur 4 zeigt dabei, dass der Blattwinkelverlauf beginnend mit der Startzeit t₀ von etwa 0° ansteigt und den Wert von etwa 100° zum Zielzeitpunkt t₁ erreicht. Der Blattwinkelverlauf 202 zeigt, dass der Blattwinkel mit der Zeit stärker ansteigt und dazu ist in dem Pitchratenverlauf 204 zu erkennen, dass die Pitchrate in mehreren Stufen ansteigt, sodass zum Ende hin der Blattwinkel am schnellsten zur Fahnenstellung hin verstellt wird.

Im Beschleunigungsverlauf 206 sind entsprechende Peaks bei den Stufen des Pitchratenverlaufs 204 zu erkennen.

Auch dieser vollständige Anhaltevorgang braucht nicht als Sicherheitsstopp ausgeführt zu werden und damit auch nicht auf einer Sicherheitssteuerung implementiert zu werden.

**Figur 5** zeigt zwei mögliche Varianten zur Ausführung eines Sicherheitsstopps, wobei noch weitere Varianten möglich sind. Es werden exemplarisch zwei Varianten gezeigt, nämlich ein Standardsicherheitsstopp mit einem Standardblattwinkelverlauf 501 und für den Fall eines Netzfehlers ein Netzfehler-Sicherheitsstopp mit einem Netzfehlerblattwinkelverlauf 502. Dem sind entsprechend ein Standardpitchratenverlauf 503 und ein Netzfehler-Pitchratenverlauf 504 zugeordnet, die das zweite Diagramm der Figur 5 zeigt. Hier ist zu erkennen, dass der Standardblattwinkelverlauf 501 schneller den Endwert von etwa 100° erreicht als der Netzfehlerblattwinkelverlauf 502.

Der Standardsicherheitsstopp kann verwendet werden, wenn für einen Sicherheitsstopp nicht zwischen unterschiedlichen Anlässen unterschieden wird. Insoweit gibt der Standardsicherheitsstopp auch eine bisherige Lösung wieder. Besonders ist aber erkannt worden, dass selbst bei einem Sicherheitsstopp die Windenergieanlage nicht immer so schnell wie bei dem Standardsicherheitsstopp verfahren werden muss. Bei einem Netzereignis, das auch als Netzfehler bezeichnet werden kann, kann bspw. so agiert werden, wie es durch den Netzfehlerblattwinkelverlauf 502 und den Netzfehler-Pitchratenverlauf 504 gezeigt ist. Das Agieren ist noch ausreichend schnell, verringert aber dabei auftretende Lasten.

Es kann auch vorgesehen sein, dass der Standardsicherheitsstopp immer dann ausgeführt wird, wenn die Anlage möglichst schnell angehalten werden soll, insbesondere, wenn ein Fehler auftritt, bei dem der Blattwinkel seinen aktuellen Wert signifikant ohne Grund verlässt, wenn der Blattwinkel also wegläuft, was auch als "pitch runaway" bezeichnet wird. Der Standardverlauf kommt auch in Betracht, wenn eine Turmschwingung erfasst wurde, die über einem vorbestimmten Turmschwingungswert liegt, oder wenn eine Überdrehzahl erkannt wurde, bei der die Rotordrehzahl über einer vorbestimmten Grenzdrehzahl liegt. Der Standardsicherheitsstopp kann aber auch dann verwendet werden, wenn der Fehler nicht identifiziert werden konnte. Dann wird standardmäßig auch dieser schnelle Anhaltevorgang gewählt.

Bei Fehlern, die eine nicht allzu schnelle Reaktion erfordern, kann der Netzfehlerverlauf 502 verwendet werden. Ein solcher Verlauf bzw. ein solcher Anhaltevorgang wird immer dann vorgeschlagen, wenn ein Netzfehler auftritt, wenn also das Netz einen vorbestimmten Fehler aufweist, wie z. B., dass die Netzfrequenz einen vorbestimmten oberen Frequenzgrenzwert überschreitet oder einen vorbestimmten unteren Frequenzgrenzwert unterschreitet. Als Netzfehler kann auch angesehen werden, wenn die Windenergieanlage den Kontakt zum Netz verliert, weil beispielsweise ein Netztrennschalter eine Verbindung getrennt hat.

Zur Verbesserung der Darstellung sind die Startzeiten der beiden Anhaltevorgänge etwas versetzt gewählt bzw. dargestellt, sodass es eine erste Startzeit t₀ für den Standardsicherheitsstopp gibt, und eine zweite Startzeit t₀' für den Anhaltevorgang im Falle eines Netzfehlers.

Der Standardblattwinkelverlauf 501 erreicht zudem sehr viel früher seine Zielzeit, nämlich die erste Zielzeit t₁, wohingegen der Netzfehlerblattwinkelverlauf 502 den Blattwinkel von etwa 100° erst zum zweiten Zielzeitpunkt t₁' erreicht.

Es ist besonders zu erkennen, dass bei dem Standardsicherheitsstopp der Standardblattwinkelverlauf 501 recht stark und schnell ansteigt, während der Netzfehlerblattwinkelverlauf 502 zwar zunächst auch schnell verstellt wird, dann aber eine lange Periode einer sehr langsamen Verstellung aufweist. Hier ist entsprechend auch die Netzfehlerpitchrate 504 gering. Besonders wird zunächst schnell gestartet, um die Rotorblätter etwas aus dem Wind zu drehen, damit weniger Windleistung von den Rotorblättern aufgenommen werden kann. Die Anlage kann dann aber etwas langsamer angehalten werden, was auch zu geringeren mechanischen Lasten führen kann. Das Pitchratendiagramm B zeigt die entsprechenden Pitchverläufe 503 bzw. 504 dazu.

Gemäß diesem Sicherheitsstopp, der auch als Anhalteprozedur "Safety stop" bezeichnet werden kann, wird die Windenergieanlage in Fahnenstellung angehalten.

In Fahnenstellung erzeugen die Rotorblätter auch bei Wind keinen Auftrieb, der Rotor steht still oder bewegt sich ganz leicht. Die Fahnenstellung ist auch hier abhängig vom Anlagentyp und kann zwischen 90° und 100° liegen.

Im Gegensatz zu den anderen Anhalteprozeduren, die in den Figuren 2 bis 4 erläutert wurden, gelten diese Sicherheitsstopps als erfolgreich abgeschlossen, wenn die Sicherheitssteuerung keine aktive Anhalteprozedur durchführt und die Bedingungen für einen erfolgreichen vollständigen Stopp gegeben sind. Dazu gehört besonders, dass die Fahnenstellung erreicht wurde.

Hier wird vorgeschlagen, dass der Sicherheitsstopp als profilierte Notfahrt durch das Pitchsystem ausgeführt wird. Eine solche profilierte Notfahrt weist somit unterschiedliche Profile auf, wie sie in Figur 5 skizziert sind, und diese Profile können sich abhängig vom Auslösegrund unterscheiden und werden durch das Sicherheitssystem vorgegeben. Auslösegründe werden über die dem Sicherheitssystem zur Verfügung stehenden Sensoriken zur Laufzeit festgelegt. Dazu kann beispielsweise die Rotordrehzahl ausgewertet werden.

Die Profile können unterschiedliche Rampen haben, wie in dem Blattwinkeldiagramm Ader Figur 5 gezeigt ist.

Im Beispiel können die Rampen und damit die Pitchraten bei vorbestimmten Blattwinkeln, die in Figur 5 beispielhaft bei 9° und 30° liegen, umgeschaltet werden und selbstständig durch das Pitchsystem abgefahren werden.

All dies, was die Figur 5 erläutert, ist in einem Sicherheitssystem implementiert. Somit wurde erkannt, dass auch bei einem Sicherheitsstopp, der in einem Sicherheitssystem implementiert ist, unterschiedliche Profile gefahren werden können. Dadurch kann trotz der Implementierung im Sicherheitssystem auf unterschiedliche Fehler unterschiedlich reagiert werden.

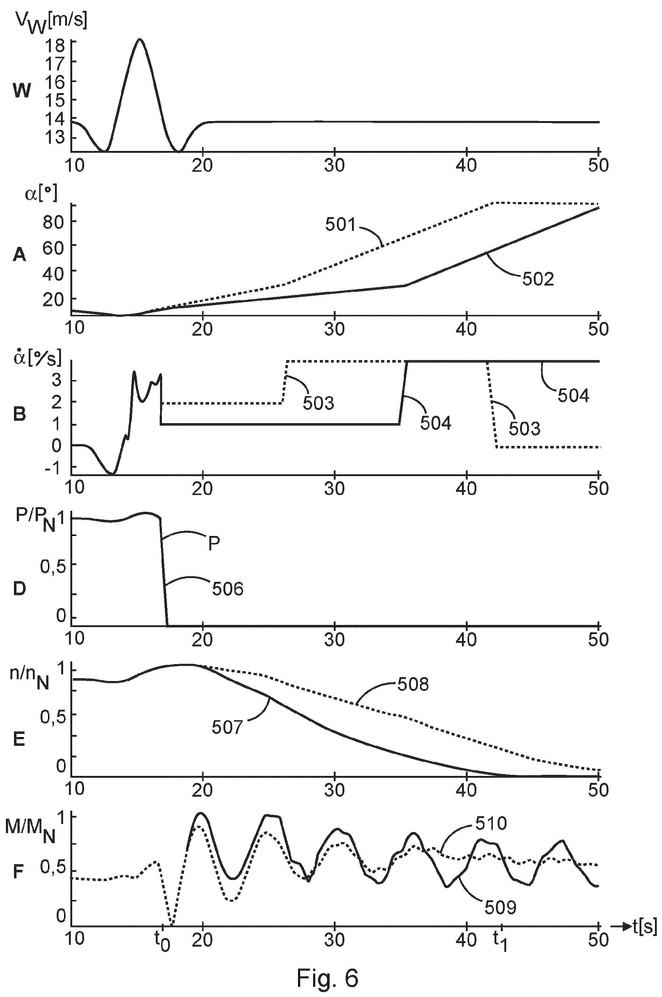

**Figur 6** erläutert die beiden Varianten der Sicherheitsstopps gemäß Figur 5 mit größeren Details. Figur 6 zeigt dazu sechs einzelne Zeitdiagramme, von oben beginnend mit dem Diagramm W, das den Verlauf einer Windgeschwindigkeit als möglichen Grund für die Auslösung eines der beiden Sicherheitsstopps darstellt.

Das Diagramm W zeigt den Verlauf der Windgeschwindigkeit 500, der einen typischen Verlauf einer Böe zeigt. Erst fällt die Windgeschwindigkeit etwas ab, was dazu führt, dass die Rotorblätter in ihrem Blattwinkel verringert werden. Dann steigt die Windgeschwindigkeit stark an und trifft dabei auf Blattwinkel, die sehr niedrig sind. Es ist üblich, zur Lastsimulation eine solche Situation zu Grunde zu legen, und zum Zwecke des Tests zusätzlich anzunehmen, dass eine solche sehr starke Böe auch ein Netzereignis auslöst. Dieses Netzereignis ist vorliegend somit das den Sicherheitsstopp auslösende Auslöseereignis.

Es führt dann also ein Netzereignis bzw. Netzfehler, das bzw. der kurz vor t₀ auftritt, zum Einleiten des Sicherheitsstopps. Insoweit wird dadurch der Netzfehler-Sicherheitsstopp ausgelöst mit den Verläufen 502, 504, 508 und 510. Zum Vergleich ist ein Standardsicherheitsstopp gemäß den Verläufen 501, 503, 507 und 509 eingezeichnet, der ebenfalls zum Zeitpunkt t₀ ausgelöst wurde.

Die Diagramme A und B entsprechen im Grunde den Diagrammen A und B der Figur 5. Das Pitchratendiagramm B der Figur 6 sieht allerdings keine versetzte Startzeit t₀ vor, sondern lässt beide Sicherheitsstopps zur selben Startzeit t₀ beginnen. Der schnellere der beiden Sicherheitsstopps, nämlich der Standardsicherheitsstopp, endet bei der Zielzeit t₁. Das Ende des langsameren Sicherheitsstopps, also des Netzfehler-Sicherheitsstopps, ist außerhalb des Zeithorizonts der Diagramme der Figur 6. Für das Blattwinkelverlaufsdiagramm A und das Pitchratenverlaufsdiagramm B sind dieselben Bezugszeichen wie in Figur 5 vorgesehen, nämlich ein Standardblattwinkelverlauf 501, ein Netzfehlerblattwinkelverlauf 502, ein Standard-Pitchratenverlauf 503 und ein Netzfehler-Pitchratenverlauf 504.

Die Verläufe dieser beiden Diagramme sind bereits im Zusammenhang mit Figur 5 erläutert, worauf hier verwiesen wird.

Weiterhin zeigt das Diagramm D einen Verlauf der erzeugten Leistung und somit einen Leistungsverlauf 506. Es ist zu erkennen, dass kurz nach dem Startzeitpunkt, nachdem eine erste Blattverstellung stattgefunden hat, die bei beiden Varianten der gezeigten Sicherheitsstopps noch identisch ist, die Leistung von dem Wert vor dem Fehler auf null reduziert wird. Die Windenergieanlage erzeugt also keine Leistung mehr.

Weiterhin ist das Diagramm E gezeigt, das den Verlauf der Rotordrehzahl zeigt und damit den Standarddrehzahlverlauf 507 und den Netzfehlerdrehzahlverlauf 508. Es ist zu erkennen, dass die Drehzahl gemäß Standarddrehzahlverlauf 507, also für den schnelleren der beiden Sicherheitsstopps, auch schneller abfällt. Der Netzfehlerdrehzahlverlauf 508 fällt entsprechend langsamer ab. In beiden Fällen fällt aber die Drehzahl auf null ab, denn die Anlage kommt zum Stillstand.

Das Diagramm F zeigt den Verlauf des Turmbiegemomentes und es ist zu erkennen, dass dieser zunächst zusammen mit dem Leistungsabfall auf null abfällt. Das Biegemoment steigt dann wieder an und es sind dann Schwingungen zu erkennen, die bei dem Netzfehlerturmmomentverlauf 510 schneller abklingen Das Diagramm F zeigt somit einen Standardturmmomentverlauf 509 und einen Netzfehlerturmmomentverlauf 510.

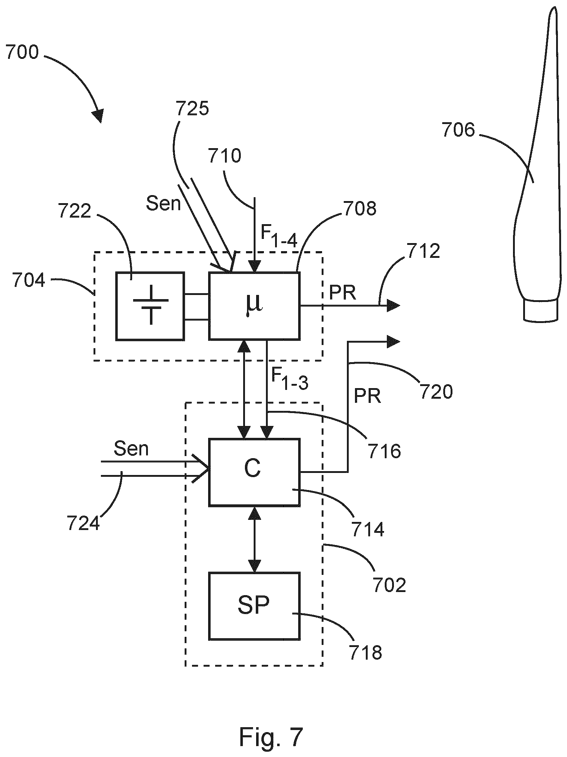

**Figur 7** zeigt schematisch eine Anlagensteuerung 700, die nur sehr schematisch dargestellt ist und auch nur einige ausgewählte Funktionalitäten zeigt. Diese Anlagensteuerung weist eine Betriebssteuerung 702 auf, der eine Sicherheitssteuerung 704 überlagert ist. Beispielhaft wird ein Rotorblatt 706 gezeigt, das über Pitchraten PR angesteuert werden kann.

Im Falle eines Fehlers F erhält der Prozessor 708 der Sicherheitssteuerung diesen als Auslöseereignis 710. Es kann in dem Prozessor 708, der beispielsweise als FPGA ausgebildet sein kann, ausgewertet werden. Wenn das Auslöseereignis zur vierten Auslöseklasse gehört, die einen Sicherheitsstopp auslöst, so wird der Prozessor 708 und damit die Sicherheitssteuerung 704 sofort tätig und gibt eine Sicherheitspitchrate 712 aus, die zur Verstellung des Blattwinkels des Rotorblatts 706 führt.

Insoweit kann der Fehler, der als Auslöseereignis 710 eingeht, zunächst einer von vier Auslöseklassen sein, wobei vier Auslöseklassen beispielhaft genannt sind, und ist daher als F₁₋₄ symbolisiert.

Der Prozessor 708 und damit die Sicherheitssteuerung 704 kann aber in dem Fall, in dem es sich bei dem Auslöseereignis nicht um eines handelt, das einen Sicherheitsstopp auslösen soll, das Auslöseereignis an die Betriebssteuerung 702 weitergeben. Das ist durch die Fehler F₁₋₃ angedeutet, die in den Prozessrechner 714 der Betriebssteuerung eingegeben werden. Dieser Prozessrechner 714 kann dann basierend auf den erhaltenen Auslöseereignissen, die insoweit keine Sicherheitsstopp-Auslöseereignisse 716 bilden, eine weitere Auswertung durchführen. Dazu kann der Prozessrechner 714 mit einem Datenspeicher 718 kommunizieren, um dann die geeignete Anhalteprozedur auszuwählen. Das Ergebnis der Auswertung kann dann auch eine Pitchrate sein, aber eine Normalpitchrate 720.

Somit kann ein Anhaltevorgang unterschiedlich ausgeführt werden, entweder als Sicherheitsstopp durch den Prozessor 708 der Sicherheitssteuerung 704, oder als Nichtsicherheitsstopp durch den Prozessrechner 714 der Betriebssteuerung 702. Die Sicherheitssteuerung 704 ist insoweit, wie erläutert, der Betriebssteuerung 702 übergeordnet.

Die Sicherheitssteuerung 704 muss diverse Kriterien erfüllen, insbesondere als Sicherheitssteuerung zertifiziert sein, und das soll auch symbolisch durch den Batteriespeicher 720 verdeutlicht werden, der sicherstellt, dass die Sicherheitssteuerung 704 auch im Falle eines Netzausfalls sicher arbeiten kann. Die Sicherheitssteuerung 704 weist somit eine redundante Stromversorgung auf.

Die Betriebssteuerung 702 braucht einen solchen Sicherheitsstandard nicht. Die Betriebssteuerung 702 ist aber dazu vorgesehen, sehr viele Aufgaben auszuführen, vereinfacht ausgedrückt, alle die, die nicht in der Sicherheitssteuerung 704 unmittelbar ausgeführt werden. Beispielhaft ist dazu auch zum Zwecke der Symbolisierung angedeutet, dass die Betriebssteuerung 702, insbesondere der Prozessrechner 714, diverse Sensordaten 724 erhält, die sie/er zum Betrieb der Windenergieanlage benötigt.

Insoweit Sensordaten für das Erkennen, Auslösen oder Durchführen eines Sicherheitsstopps benötigt werden, erhält die Sicherheitssteuerung 704, insbesondere dessen Prozessor 708 selbst und direkt Sensordaten 725. Dadurch wird vermieden, dass Sensordaten über die Betriebssteuerung übertragen werden, was im Störfall das Ausführen eines Sicherheitsstopps behindern könnte, was durch das direkte Zuführen der Sensordaten 725 vermieden wird.

Weiterhin ist Folgendes zur Erfindung, nicht beschränkt auf konkrete Ausführungsformen, zu erläutern.

Die Turbine, was synonym für Windenergieanlage steht, kann in Abhängigkeit von dem Ereignis, das zum Anhalten der Turbine führt, unterschiedliche Stoppverfahren durchführen. Das Verfahren kann das Profil für das Pitchsystem umfassen, das verwendet wird, um die Rotorblätter, die vereinfachend und synonym auch als Blätter bezeichnet werden können, in die Fahnenstellung zu bringen. Das Verfahren kann auch das Steuern des Generatormoments während des Stoppverfahrens umfassen. Die Stoppverfahren lassen sich anhand der Hardware-Einheit unterscheiden, die den Stopp steuert. Auf der Grundlage des aufgetretenen Ereignisses oder Fehlers und der Hardware-Einheit, die den Stopp steuert, kann eine Priorisierung der vorhandenen Stoppverfahren vorgenommen werden, wobei der Sicherheitsstopp das Stoppverfahren mit der höchsten Priorität ist.

Während des Entwurfsprozesses zum Entwerfen bzw. Auslegen der Windenergieanlage muss sichergestellt werden, dass die Entwurfslasten durch keines der Stoppverfahren überschritten werden. Dies wird dadurch gewährleistet, dass jede Pitchrate auf die Pitchrate des Sicherheitsstopps des entsprechenden Blattwinkels begrenzt wird. Das Vorhandensein von mehreren Stoppverfahren in der Betriebssteuerung ist seit einigen Jahren Industriestandard, jedoch besteht der Sicherheitsstopp bisher nur aus einem einzigen Stoppverfahren.

Die vorgeschlagene Erfindung beinhaltet eine dynamische Auswahl des vom Sicherheitssystem durchgeführten Stoppverfahrens auf der Grundlage der Art des Fehlers und der aktuellen Arbeitsbedingungen. Die Auswahl, insbesondere dynamische Auswahl umfasst insbesondere:
- die Wahl der gesteuerten Pitchrate bei einem bestimmten Pitchwinkel
- den Sollwert für das Drehmoment des Generators.

Aufgrund des skizzierten Prioritätssystems der Stoppverfahren muss das Sicherheitssystem über das Stoppverfahren entscheiden, um die Auslegungslasten zu gewährleisten. Die Anzahl der Sicherheits-Stopp-Verfahren ist nicht auf 2 begrenzt, sondern kann auch höher sein. Die Auswahl des Stoppverfahrens ist auch nicht auf den Beginn des Stopps beschränkt, sondern kann auch umgeschaltet oder sogar dynamisch angepasst werden, z. B. durch Anwendung eines Faktors, der auf vordefinierten Regelwerken basiert.

Eine beispielhafte Anwendung ist ein FRT-Ereignis (s. Figur 6). Zuvor führt die Turbine im Falle eines Netzausfalls einen Schnellstopp durch 501, 503, 507 und 509, gesteuert von der Betriebssteuerung, der dasselbe Pitch-Profil aufweist wie der Standard-Sicherheits-stopp 502, 504, 508 und 510, der für den Lastausgleich zwischen Turm, Maschine und Blatt durch andere Ausfallszenarien optimiert ist. Die Verringerung der Pitchrate zwischen 9° und 30° Pitchwinkel reduziert das resultierende Turmbiegemoment aufgrund des höheren Schubs 509, der den Turm bei der Vorwärtsbewegung dämpft. Der Wechsel zum sekundären Pitchprofil ist mit einem FRT-Ereignis verbunden, das vom Sicherheitssystem erkannt werden muss.

Um ein sicheres Stoppverfahren zu gewährleisten, wird ein zusätzliches Auswahlkriterium vorgeschlagen, das auf den aktuellen Betriebsbedingungen der Turbine basiert. Die reduzierte Pitchrate führt zu einer höheren aerodynamischen Leistung aufgrund des geringeren Pitchwinkels. Je nach Windverhältnissen kann dies zu kritischen Überdrehzahlen führen, insbesondere, wenn man das fehlende Generatormoment aufgrund von Netzausfällen und die begrenzte Chopperleistung berücksichtigt. Die Auswahl des Pitchprofils beinhaltet daher die Überwachung der aktuellen Rotordrehzahl und Rotorbeschleunigung. Wird ein bestimmter Drehzahlschwellenwert überschritten und ist die Rotorbeschleunigung noch positiv, muss das Sicherheitssystem auf das standardmäßige (schnellere) Stoppverfahren umschalten, um kritische Überdrehzahlen zu vermeiden. Dieses standardmäßige (schnellere) Stoppverfahren zeigen die Verläufe 501, 503, 507 und 509.

Eine andere Möglichkeit wäre die Implementierung einer Rückkopplungskontrolle während der Stoppverfahren auf der Grundlage vorhandener funktionssicherer Messungen, einschließlich Turmbeschleunigungssensoren und Rotordrehzahlmessungen. Es wird vorgeschlagen, dass der gesamte Auswahlprozess vollständig in die Sicherheitssoftware mit zertifiziertem Leistungsniveau implementiert wird.

## Patentansprüche

1. Verfahren zum Steuern einer Windenergieanlage, wobei
- die Windenergieanlage einen aerodynamischen Rotor mit in ihrem Blattwinkel verstellbaren Rotorblättern aufweist, und
- der Rotor mit einer variablen Rotordrehzahl betreibbar ist, wobei
- zum Anhalten des Rotors, die Rotorblätter in Richtung zu einer Fahnenstellung hin verstellt werden,
- das Anhalten durch ein Auslöseereignis ausgelöst wird und
- wenn in Abhängigkeit vom Auslöseereignis ein Sicherheitsstopp ausgelöst wird, zusätzlich in Abhängigkeit von dem Auslöseereignis eine von mehreren Steuerstrategien zum Ausführen des Sicherheitsstopps ausgewählt wird.

2. Verfahren nach Anspruch 1, **dadurch gekennzeichnet, dass**
- den Steuerstrategien eine Trajektorie zu Grunde liegt, wobei
- die Trajektorie jeweils durch einen Pitchratenverlauf und zugeordneten Blattwinkel gekennzeichnet ist, insbesondere Zielblattwinkel, wobei optional ein einer ausgewählten Steuerstrategie zugeordneter Verlauf einer Generatorleistung und/oder eines Generatormoments vorgesehen ist und/oder
- die Trajektorie durch die Pitchrate über die Zeit gekennzeichnet ist.

3. Verfahren nach Anspruch 1 oder 2, **dadurch gekennzeichnet, dass**
- bei einem Sicherheitsstopp
- die Windenergieanlage in einen Stillstand gesteuert wird, in dem sich der Rotor nicht mehr dreht und sich in einer sicheren Position befindet, und/oder
- die Rotorblätter in die Fahnenstellung verstellt werden, und/oder
- die Rotorblätter zunächst in eine Position von etwa 90° verstellt werden, insbesondere mittels einer vorbestimmten Trajektorie, und anschließend die Windenergieanlage in eine Trudelposition gebracht wird.

4. Verfahren nach einem der vorstehenden Ansprüche, **dadurch gekennzeichnet, dass**
- mit der Steuerstrategie fürdie Rotorblätter unterschiedliche Zielblattwinkel angesteuert werden, oder
- die Rotorblätter so in ihrem Blattwinkel verstellt werden, dass sie auf gleiche Zielblattwinkel angeglichen werden, sollten sie zu Beginn des Sicherheitsstopps unterschiedliche Blattwinkel aufgewiesen haben, oder sollten beim Ausführen des Sicherheitsstopps unterschiedliche Blattwinkel aufgetreten sein.

5. Verfahren nach einem der vorstehenden Ansprüche, **dadurch gekennzeichnet, dass**
- die Windenergieanlage eine Betriebssteuerung und eine Sicherheitssteuerung aufweist und
- der Sicherheitsstoppt von der Sicherheitssteuerung gesteuert wird und insbesondere
- das Anhalten des Rotors durch die Betriebssteuerung gesteuert wird, wenn kein Sicherheitsstopp vorliegt.

6. Verfahren nach einem der vorstehenden Ansprüche, **dadurch gekennzeichnet, dass**
- zum Klassifizieren möglicher Auslöseereignisse unterschiedliche Auslöseklassen vorgesehen sind,
- ein auftretendes Auslöseereignis einer der Auslöseklassen zugeordnet wird,
- die Steuerstrategie in Abhängigkeit von der zugeordneten Auslöseklasse ausgewählt wird, und
- ein Sicherheitsstopp einer der Auslöseklassen zugeordnet ist,
wobei insbesondere
- wenigstens drei Auslöseklassen vorgesehen sind.

7. Verfahren nach einem der vorstehenden Ansprüche, **dadurch gekennzeichnet, dass**
- ein Sicherheitsstopp **dadurch gekennzeichnet ist, dass** seine Auslöseereignisse als sicherheitsrelevante Auslöseereignisse hinterlegt sind und/oder seine Auslöseereignisse, oder einige davon, das Verletzen eines Sicherheitsgrenzwertes sind, wobei insbesondere
- als Auslöseklassen mehrere vorgesehen sind aus der Liste aufweisend:
- eine erste Auslöseklasse, die als langsamer Trudelstopp bezeichnet werden kann und die Auslöseereignisse klassifiziert, die ein Anhalten der Anlage in einen Trudelbetrieb auslösen, wobei zum Anhalten die Rotorblätter mit einer Blattverstellgeschwindigkeit verstellt werden, die einen Mittelwert aufweist, der unter einem vorgebbaren ersten Grenzwert liegt,
- eine zweite Auslöseklasse, die als schneller Trudelstopp bezeichnet werden kann und die Auslöseereignisse klassifiziert, die ein Anhalten der Anlage in einen Trudelbetrieb auslösen, wobei zum Anhalten die Rotorblätter mit einer Blattverstellgeschwindigkeit verstellt werden, die einen Mittelwert aufweist, der über dem vorgebbaren ersten Grenzwert liegt, insbesondere über einem zweiten Grenzwert, der über dem ersten Grenzwert liegt,
- eine vierte Auslöseklasse, die einen Sicherheitsstopp auslöst und die Auslöseereignisse klassifiziert, die als sicherheitsrelevante Auslöseereignisse hinterlegt sind und/oder die durch das Verletzen eines Sicherheitsgrenzwertes durch einen Sensorwert entstehen, und
- eine dritte Auslöseklasse, die als vollständiger Stopp bezeichnet werden kann und die Auslöseereignisse klassifiziert, die ein Anhalten der Anlage in einen Stillstand auslöst, ohne unter die vierte Auslöseklasse zu fallen.

8. Verfahren nach einem der vorstehenden Ansprüche, **dadurch gekennzeichnet, dass**
- eine bzw. die Auslöseklasse, die Auslöseereignisse zum Auslösen eines Sicherheitsstopps klassifiziert, mehrere Auslöseereignisse zum Auslösen eines Sicherheitsstopps aufweist, wobei
- die mehreren Auslöseereignisse priorisiert sind, sodass bei Vorliegen mehrerer der Auslöseereignisse, die einen Sicherheitsstopp auslösen, die Steuerstrategie verwendet wird, die von den vorliegenden Auslöseereignissen dem mit der höchsten Priorität zugeordnet ist, und/oder
- die Steuerstrategie im Verlauf des Sicherheitsstopps gewechselt wird, wenn wenigstens ein Auslöseereignis mit gegenüber den übrigen vorliegenden Auslöseereignissen höherer Priorisierung hinzukommt oder wegfällt.

9. Verfahren nach einem der vorstehenden Ansprüche, **dadurch gekennzeichnet, dass**
- zum Verstellen der Rotorblätter ein Pitchsystem vorhanden ist,
- in dem Pitchsystem eine Default-Trajektorie hinterlegt ist und
- zum Verstellen der Rotorblätter die Default-Trajektorie verwendet wird, wenn das Pitchsystem seine Kommunikationsverbindung zum Sicherheitssystem verliert, wobei
- ansonsten statt der Verwendung der Default-Trajektorie das Verstellen der Rotorblätter bei einem Sicherheitsstopp durch das Sicherheitssystem vorgegeben wird.

10. Verfahren nach einem der vorstehenden Ansprüche, **dadurch gekennzeichnet, dass**
- das Sicherheitssystem zum Steuern des Sicherheitsstopps einen für ein Sicherheitssystem zertifizierten Mikrocontroller und/oder eine für ein Sicherheitssystem zertifizierte Kommunikations-Hardware aufweist, und/oder dass
- ein Sicherheitsstopp nur in Abhängigkeit von einem Signal ausgelöst wird, das wenigstens ein vorbestimmtes Sicherheitskriterium erfüllt und als Sicherheitssignal bezeichnet werden kann, wobei insbesondere
- das Sicherheitssignal redundant ausgeführt ist und/oder als Sicherheitssignal zertifiziert ist.

11. Verfahren nach einem der vorstehenden Ansprüche, **dadurch gekennzeichnet, dass**
die einen bzw. den Sicherheitsstopp auslösenden Auslöseereignisse ausgewählt sind aus der Liste aufweisend,
- eine Drehzahl überschreitet eine vorbestimmte Grenzdrehzahl, welche insbesondere bei Überschreiten einen Sensorfehler anzeigt,
- eine Turmschwingung und/oder Turmbeschleunigung übersteigt einen vorbestimmten Turmschwingungsgrenzwert bzw. einen vorbestimmten Turmbeschleunigungsgrenzwert,
- eine Blattwinkeldifferenz zwischen zwei der Rotorblätter überschreitet einen vorbestimmten Differenzwinkelgrenzwert,
- der Blattwinkel mindestens eines Rotorblattes unterschreitet einen vorbestimmten minimalen Blattwinkel,
- ein Notstopp-Schalter wird betätigt,
- eine Generatorschwingung liegt über einem vorbestimmten Generatorschwingungsgrenzwert,
- ein Netzfehler tritt auf, und/oder eine Netztrennung,
- eine erfasste Ptichrate weicht von einer in Abhängigkeit einer erfassten Rotordrehzahl zu erwartenden Pitchrate um mehr als eine vorbestimmte maximale Abweichungsrate ab,
- Pitchraten in Abhängigkeit der gemessenen Drehzahl,
- eine erfasste Rotorblattschwingung übersteigt einen vorbestimmten Grenzwert, und
- eine erfasste Schräganströmung überschreitet ein vorbestimmtes Schräganströmungsmaß.

12. Verfahren nach einem der vorstehenden Ansprüche, **dadurch gekennzeichnet, dass**
- wenn das Auslöseereignis einen Sicherheitstopp auslöst,
- das Auslöseereignis identifiziert wird und
- ein zeitliches Pitchratenprofil in Abhängigkeit von dem identifizierten Auslöseereignis ausgewählt oder eingestellt wird und/oder
- ein zeitliches Generatorprofil in Abhängigkeit von dem identifizierten Auslöseereignis ausgewählt oder eingestellt wird, wobei das zeitliche Generatorprofil einen zeitlichen Verlauf eines Generatormomentes oder einer Generatorleistung bezeichnet.

13. Verfahren nach einem der vorstehenden Ansprüche, **dadurch gekennzeichnet, dass**
- das Anhalten des Rotors durch den Sicherheitsstopp so gesteuert wird, dass eine oder mehrere vorbestimmte Lastgrenzen nicht überschritten, insbesondere aber erreicht, oder zu wenigstens 90% erreicht werden, wobei insbesondere die Lastgrenzen ausgewählt sind aus der Liste aufweisend
- eine maximale Blattlast der Rotorblätter,
- eine maximale Blattschwingungsamplitude,
- eine maximale Turmbiegung,
- eine maximale Turmschwingungsamplitude,
- eine maximale Turmbeschleunigung, und
- eine maximale Rotorwellenbiegung oder Achszapfenbiegung eines den Rotor tragenden Achszapfens.

14. Verfahren nach einem der vorstehenden Ansprüche, **dadurch gekennzeichnet, dass**
- das Steuern des Sicherheitsstopps durch das Sicherheitssystem in eine Regelung eingebunden ist, sodass
- das Anhalten des Rotors, insbesondere ein Verstellen der Rotorblätter und/oder das Steuern eines Generatormoments oder einer Generatorleistung, in Abhängigkeit von wenigstens einer erfassten oder geschätzten Last so erfolgt, dass diese wenigstens eine Last jeweils einen vorbestimmten Lastgrenzwert einhält.

15. Verfahren nach einem der vorstehenden Ansprüche, **dadurch gekennzeichnet, dass**
- das Sicherheitsverfahren zum Ausführen des Sicherheitsstopps so ausgeführt ist, insbesondere redundant ausgeführt ist,
- dass der Sicherheitsstopp auch bei Ausfall der Betriebssteuerung durch das Sicherheitssystem ausgeführt werden kann, und/oder
- das Sicherheitssystem dazu zertifiziert ist, einen Sicherheitsstopp auch bei Ausfall der Betriebssteuerung sicher zu steuern, und/oder
- das Sicherheitssystem der Betriebssteuerung übergeordnet ist, sodass das Sicherheitssystem die Betriebssteuerung überwacht.

16. Verfahren nach einem der vorstehenden Ansprüche, **dadurch gekennzeichnet, dass**
- die Steuerstrategie zusätzlich in Abhängigkeit von wenigstens einem Betriebszustand der Windenergieanlage beim Eintritt des Auslöseereignisses ausgewählt wird, und dass optional
- die Steuerstrategie während des Steuerns des Sicherheitsstopps angepasst wird, insbesondere in Abhängigkeit von wenigstens einem laufend erfassten Betriebszustand.

17. Windenergieanlage, wobei
- die Windenergieanlage einen aerodynamischen Rotor mit in ihrem Blattwinkel verstellbaren Rotorblättern aufweist, und
- der Rotor mit einer variablen Rotordrehzahl betreibbar ist, wobei die Windenergieanlage dazu vorbereitet ist, dass
- zum Anhalten des Rotors, die Rotorblätter in Richtung zu einer Fahnenstellung hin verstellt werden,
- das Anhalten durch ein Auslöseereignis ausgelöst wird und
- wenn in Abhängigkeit vom Auslöseereignis ein Sicherheitsstopp ausgelöst wird, zusätzlich in Abhängigkeit von dem Auslöseereignis eine von mehreren Steuerstrategien zum Ausführen des Sicherheitsstopps ausgewählt wird.

18. Windenergieanlage nach Anspruch 17, **dadurch gekennzeichnet, dass**
- die Windenergieanlage eine Anlagensteuerung aufweist, und dass
- die Windenergieanlage, insbesondere die Anlagensteuerung, dazu vorbereitet ist, ein Verfahren nach einem der Ansprüche 1 bis 16 auszuführen, wobei insbesondere
- die Anlagensteuerung eine Betriebssteuerung und eine der Betriebssteuerung überlagerte Sicherheitssteuerung aufweist.
